# EUROPÄISCHE PATENTSCHRIFT

(11) **EP 4 619 574 B1**
(45) Veröffentlichungstag und Bekanntmachung des Hinweises auf die Patenterteilung: **02.12.2026**
(21) Anmeldenummer: 23790674.8
(22) Anmeldetag: 18.10.2023
(51) Int. Cl.: D01G 31/00, D01H 13/32, G01N 21/89

(54) **AUFBEREITUNGSMASCHINE MIT EINER INSPEKTIONSEINRICHTUNG ZUM ERKENNEN VON FREMDKÖRPERN IN FASERMATERIAL, ANLAGE UND VERFAHREN**
PREPARATION MACHINE WITH A INSPECTION DEVICE FOR DETECTING FOREIGN BODIES IN FIBER MATERIAL, SYSTEM, AND METHOD
MACHINE DE PRÉPARATION AVEC UN DISPOSITIF D'INSPECTION POUR DÉTECTER DES CORPS ÉTRANGERS DANS UN MATÉRIAU FIBREUX, SYSTÈME ET PROCÉDÉ

(30) Priorität: 15.11.2022 DE 102022130137
(43) Veröffentlichungstag der Anmeldung: 24.09.2025
(73) Patentinhaber: Trützschler Group SE, 41199 Mönchengladbach (DE)
(72) Erfinder: ENGELS, Guido, 41569 Rommerskirchen (DE); DOVERN, Martin, 41363 Jüchen (DE)
(86) Internationale Anmeldenummer: PCT/EP2023/078973
(87) Internationale Veröffentlichungsnummer: WO 2024/104691

(56) Entgegenhaltungen:
- EP-A1- 0 967 305
- EP-A1- 2 031 377
- DE-A1- 19 943 079
- DE-A1- 19 955 292
- GB-A- 2 461 967

## Beschreibung

Die vorliegende Erfindung betrifft eine Aufbereitungsmaschine mit einer Inspektionseinrichtung zum Erkennen von Fremdkörpern in Fasermaterial, das in einem Füllschacht einer Aufbereitungsmaschine, insbesondere einer Spinnereivorbereitungsmaschine, aufgenommen ist. Die Inspektionseinrichtung umfasst eine Öffnungsverschlussvorrichtung zum Verschließen einer Gehäuseöffnung der Aufbereitungsmaschine, über die der Füllschacht von außen einsehbar ist. Die Öffnungsverschlussvorrichtung weist ein Trennelement mit einem durchsichtigen Beobachtungsbereich, der eine Beobachtungsebene definiert, und ein am Trennelement angeordnetes Deckelelement auf, wobei zwischen dem Trennelement und dem Deckelement ein Innenraum gebildet ist. In dem Innenraum ist eine Kameravorrichtung angeordnet. Die vorliegende Erfindung betrifft auch eine Anlage mit mehreren Aufbereitungsmaschinen und ein Verfahren zum Erkennen von Fremdkörpern im Fasermaterial.

In einer Spinnerei ist die eingekaufte Faserqualität eines Faserballens, der beispielsweise aus Baumwolle, Polyester, Mischfasern oder dergleichen sein kann, bekannt. Allerdings ist ein Rückschluss von der Qualität der Faservorlage in der Putzerei zur Garnqualität nur schwer möglich. Qualitätsschwankungen in der Ballenvorlage werden im laufenden Aufbereitungsprozess oftmals nicht erkannt und notwendige Anpassungen an Maschineneinstellungen, um trotz Qualitätsschwankungen stets eine optimale Garnqualität zu erhalten, werden nicht vorgenommen. Von den vielen möglichen Rohstoffkennwerten für Fasermaterial ist die Erfassung des Fremdkörpergehaltes bzw. Störpartikelgehalts ein üblicher Kennwert. In den gepressten Faserballen vorhandene Fremdkörper sind beispielsweise pflanzliche Bestandteile wie Stängel, Blätter, Samenkörner (allgemein auch als "Trash" bezeichnet) oder auch Verpackungsreste wie Stoffe, Gewebe, Folien, Kunststoffbänder und dergleichen. Von diesen Fremdkörpern werden in den klassifizierten Rohstoffkennwerten der eingekauften Ballen nur die pflanzlichen Fremdkörper (Trash) erfasst. Die anderen Bestandteile sind aufgrund ihrer vergleichsweisen geringen Häufigkeit durch klassische Probenentnahme mit Laboranalysegeräten kaum erfassbar. Darüber hinaus ist der tatsächliche Gehalt sehr großen Schwankungen unterworfen. Aber auch bei dem Gehalt an pflanzlichen Bestandteilen gibt es so starke Abweichungen der tatsächlichen Rohstoffqualität von den klassifizierten Werten, die im Hinblick auf die Qualitätsanforderung des Endproduktes, aber auch hinsichtlich des Einsatzes von Energie und eines ressourcensparenden Umgangs mit dem Rohstoff, eine veränderte Einstellung der Aufbereitungsmaschinen erforderlich machen würde. Ein Nachjustieren der Maschinen aufgrund von Schwankungen in der Rohstoffqualität ist in der Praxis aber nicht umsetzbar, da die zur Verfügung stehenden Messmethoden über Laboranalytik zu träge sind, um rechtzeitig, das heißt noch während der Verarbeitung des Materials, eine entsprechende Regelgröße zu generieren, oder wäre mit einem erheblichen Aufwand verbunden.

Aus der DE 10 2019 115 138 ist ein Sensor bekannt, der unter anderem auch den Fremdkörpergehalt in einem Kardenvlies im laufenden Prozess automatisiert bestimmen kann. Dieser Sensor liefert die Daten für die Qualität nach dem letzten signifikanten Bearbeitungsschritt des Kardierens. Der dort ermittelte Fremdkörpergehalt ist hervorragend geeignet, um die Qualität des nachfolgend produzierten Garns zu beschreiben, er erfasst aber weder die aktuelle Qualität des vorgelegten Rohstoffes noch die Qualität des Fasermaterials an den vorangegangen Zwischenschritten, wie Vorreinigen, Mischen, Reinigen, Öffnen, Fremdteilausscheidung. Läuft die Qualität an dieser Stelle weg, so ist nicht klar, ob es am Rohstoff- oder an einem der vorangehenden Prozessschritte gelegen hat.

EP 3 951 033 A1 beschreibt eine Probenentnahme an Reinigungsstellen diverser Spinnereivorbereitungsmaschinen. Über ein Netz von Rohrleitungen und Absperrorganen wird an den Reinigungsstellen anfallendes Abfallmaterial abgesaugt und über eine Transportleitung in einen mit einer Waage ausgestatteten zentralen Behälter abtransportiert. Auf die Waage ist eine Kamera gerichtet. Die Waage und die Kamera wie auch ein Ventilator und die Absperrorgane sind mit einer Steuerung verbunden. Durch die Steuerung soll eine Überführung des Abfallmaterials aus einer Reinigungsstelle initiiert werden. Dazu soll das jeweilige Absperrorgan in der Verbindung der jeweiligen Reinigungsstelle bspw. am Grobreiniger geöffnet und der Ventilator eingeschaltet werden. Das Abfallmaterial des Grobreinigers soll durch die Transportleitung in den zentralen Behälter gesaugt, von der Transportluft befreit und in die Waage gefüllt werden. Nach Füllen der Waage wird das Absperrorgan wieder geschlossen und das Abfallmaterial gewogen und durch die Kamera optisch erfasst. Auf diese Weise sollen die verschiedenen Reinigungsstellen nacheinander entleert und das daraus abgesaugte Abfallmaterial dem zentralen Behälter zugeführt werden. Mittels der Kamera soll eine Abfallzusammensetzung analysiert werden, um damit die Einstellungen der jeweiligen Spinnereivorbereitungsmaschine anpassen bzw. optimieren zu können.

Als nachteilig wird erachtet, dass die periodische Probennahme nur geringe Probengrößen pro Spinnereivorbereitungsmaschine ermöglicht und keine kontinuierliche Überwachung erlaubt. Weiterhin lässt die Abfallzusammensetzung keine Rückschlüsse auf die einlaufende Qualität des Rohmaterials zu. Außerdem wird der Projektierungs- und Montageaufwand der vielen Rohrleitungen, Absperrorgane und der damit erforderlichen Steuerung als nachteilig empfunden, der darüber hinaus für jede Spinnereianlage mit individueller Maschinenfolge offensichtlich immer wieder neu anfällt.

Die DE 199 43 079 A1 offenbart eine kamerabasierte Messstrecke zur Detektion von Verunreinigungen im Faserflor einer Karde, die innerhalb der Karde angeordnet ist. Die DE 199 55 292 A1 beschreibt eine Vorrichtung innerhalb eines Fremdteilausscheiders, die farbselektive Lichtquellen und Sensoren verwendet, um farbige Fremdstoffe zu identifizieren und gezielt zu entfernen. EP 0 967 305 A1 offenbart ein Verfahren zur Reinigung von Baumwollfasern in einem breiten offenen Faserstrom, bei dem optische Erkennung mit mechanischer Trennung kombiniert wird, um eine hohe Reinheit des Materials sicherzustellen. Die EP 2 031 377 A1 zeigt eine automatische optische Inspektionsvorrichtung für textile Flächengebilde, die mittels Spiegeln und Lichtwegen Oberflächenfehler erkennt und für die kontinuierliche Qualitätskontrolle ausgelegt ist. GB 2461967 B offenbart eine Vorrichtung zur Erkennung von Fremdstoffen in Faserstoffen, insbesondere Baumwolle, und die Entfernung der Fremdstoffe unter Verwendung optischer Sensoren und pneumatischer Ausstoßmechanismen.

EP 3 951 032 A1 beschreibt eine Vorrichtung mit einer Kamera, um Störpartikel in Fasermaterial, das in einem Füllschacht einer Spinnereivorbereitungsmaschine gesammelt wird, zu erkennen. Die Kamera ist unter einem Winkel von maximal +/- 30 Grad zu einer auf die Faseroberfläche ausgerichteten Senkrechten angeordnet. Die zumindest im Wesentlichen senkrechte Anordnung der Kamerasichtlinie auf das Fasermaterial beschreibt eine für die Sensorik und Auswertung günstige und einfach umzusetzende Anordnung, erzeugt aber hierdurch Nachteile hinsichtlich Zugänglichkeit der Spinnereivorbereitungsmaschine.

Aufgabe der vorliegenden Erfindung ist es, eine Inspektionseinrichtung, eine Verwendung einer derartigen Inspektionseinrichtung in einer Aufbereitungsmaschine, eine Aufbereitungsmaschine mit einer derartigen Inspektionseinrichtung, eine Anlage mit mehreren der Aufbereitungsmaschinen und ein Verfahren bereitzustellen, mittels derer sich das Erkennen von Fremdkörpern in Fasermaterial noch weiter optimieren lässt.

Die Aufgabe wird durch eine Aufbereitungsmaschine gemäß Anspruch 1 gelöst.

Von Vorteil ist, dass die Inspektionseinrichtung eine flache Bauform. Damit lässt sich die Inspektionseinrichtung auf einfache Weise in die Gehäuseöffnung einsetzen, ohne störend überzustehen. Denn dadurch, dass die Kameravorrichtung nicht direkt auf den Beobachtungsbereich ausgerichtet ist, sondern die Ablenkungsvorrichtung den Strahlengang umlenkt bzw. faltet, ist die Kameravorrichtung mit einem geringen Abstand zur Beobachtungsebene anordbar. Damit kann eine senkrecht zur Beobachtungsebene verlaufende Erstreckung, sprich eine Tiefe der Inspektionseinrichtung möglichst klein auslegbar sein. Zudem ist durch die Umlenkung des Strahlengangs über die Ablenkungsvorrichtung die Strecke zwischen der Kameravorrichtung und dem Beobachtungsbereich verlängert, wodurch der Erfassungsbereich vergrößerbar ist, ohne in die Bautiefe gehen zu müssen. Mittels der Kameravorrichtung kann das an der Inspektionseinrichtung vorbeiziehende Fasermaterial durch den transparenten Beobachtungsbereich von außen, das heißt außerhalb des Füllschachts, optisch inspiziert werden, um Qualitätsmerkmale, insbesondere den Fremdkörpergehalt bestimmen und somit Qualitätsschwankungen schneller erkennen zu können. Damit entfällt das Entnehmen von Proben vom Fasermaterial.

Vorliegend soll "zumindest im Wesentlichen parallel" bedeuten, dass die optische Achse in bevorzugter Weise parallel zur Beobachtungsebene ausgerichtet sein kann, wobei auch eine voreingestellte Abweichung von der Parallelität in einem Bereich von plus 15 Grad bis minus 15 Grad umfasst sein soll. Bei einer Abweichung von der Parallelität kann ein Schnittpunkt von der optischen Achse und der Beobachtungsebene außerhalb des Beobachtungsbereichs liegen, sodass die Kameravorrichtung nicht direkt auf den Beobachtungsbereich gerichtet ist, sondern immer über die Ablenkungsvorrichtung auf den Beobachtungsbereich blickt.

Die Kameravorrichtung und die Ablenkungsvorrichtung sind vorzugsweise vollständig im Innenraum der Öffnungsverschlussvorrichtung untergebracht. Das Deckelelement ist am Trennelement angeordnet und deckt somit die zwischen dem Trennelement und dem Deckelelement angeordnete Kameravorrichtung schützend nach außen hin ab. Vorzugsweise sind das Deckelelement und das Trennelement fest miteinander verbunden. Das Trennelement kann eben gestaltet sein, wobei dessen Ausgestaltung vorzugsweise der Form und Kontur der die Gehäuseöffnung umgebenden Gehäusewand entsprechen kann, um ein ungestörtes Vorbeiziehen des Fasermaterials zu gewährleisten. Das Trennelement kann auch als Trennwand bezeichnet werden. Das Deckelelement kann zur Bildung des Innenraums zum Beispiel wannen-, bzw. schalenartig gestaltet sein.

Die Ablenkungsvorrichtung kann eine reflektierende Oberfläche aufweisen. Ein Einfalls- bzw. Ausfallswinkel zwischen dem Strahlengang und einer Flächennormalen der reflektierenden Oberfläche kann jeweils 45 Grad betragen. Diese Anordnung ist besonders dann von Vorteil, wenn die optische Achse der Kameravorrichtung parallel zur Beobachtungsebene ausgerichtet ist. Alternativ kann der Einfalls- bzw. Ausfallwinkel jeweils größer als 45 Grad und weiter bevorzugt größer als 50 Grad und insbesondere kleiner als 85 Grad betragen. Dadurch kann die Kameravorrichtung näher an das Trennelement herangerückt sein, wodurch eine noch flacher bauende Inspektionseinrichtung bereitstellbar ist. Je nach Ausrichtung können der Einfalls- bzw. Ausfallswinkel auch kleiner als 45 Grad und insbesondere größer als 15 Grad sein. Dadurch ergibt sich zwar eine etwas größere Bautiefe, jedoch geht dies auch mit einem größeren Abstand zwischen der Kameravorrichtung und dem Beobachtungsbereich einher, wodurch der Erfassungsbereich der Kameravorrichtung vergrößert werden kann. Die Ablenkungsvorrichtung kann zumindest ein Ablenkungselement, insbesondere einen Spiegel umfassen, wobei alternativ zum Spiegel oder als weiteres Ablenkungselement ein Lichtwellenleiter oder dergleichen vorgesehen sein kann.

Im Innenraum der Öffnungsverschlussvorrichtung kann eine Beleuchtungsvorrichtung zum Beleuchten des am Beobachtungsbereich vorbeigeführten Fasermaterials angeordnet sein. Dies verbessert die Bildqualität. Die Beleuchtungsvorrichtung kann sich über eine gesamte Breite des Beobachtungsbereichs erstrecken. Insbesondere kann die Beleuchtungsvorrichtung eine Vielzahl an Leuchtdioden, respektive LED-Lichtquellen umfassen, die Linsen aufweisen können, um das von der jeweiligen Leuchtdiode emittierte Licht gleichmäßig zu verteilen. Weiterhin kann die Beleuchtungsvorrichtung ein unteres Beleuchtungselement aufweisen, wobei die Ablenkungsvorrichtung entlang der optischen Achse betrachtet zwischen der Kameravorrichtung und dem unteren Beleuchtungselement angeordnet ist. Zusätzlich oder alternativ zum unteren Beleuchtungselement kann die Beleuchtungsvorrichtung ein oberes Beleuchtungselement aufweisen, wobei das obere Beleuchtungselement zwischen der Kameravorrichtung und der Ablenkungsvorrichtung angeordnet ist. Zum Beispiel kann das obere und/oder untere Beleuchtungselement jeweils in Form einer Lichtleiste bzw. LED-Leiste ausgestaltet sein.

Zur Vermeidung von Lichtreflektionen auf den mit der Kameravorrichtung aufgenommenen Bildern kann das zumindest eine auf den Beobachtungsbereich ausgerichtete Beleuchtungselement in einem deutlich von der Flächennormale der Beobachtungsebene abweichendem Einstrahlwinkel angeordnet sein. Dies bietet sich vor allem dann an, wenn sowohl oberhalb als auch unterhalb des Beobachtungsbereichs die beiden Beleuchtungselemente angeordnet sind. Ebenso möglich ist, dass der Einstrahlwinkel des Beleuchtungselements senkrecht auf die Beobachtungsebene gerichtet ist. Dies ist besonders dann von Vorteil, wenn der Strahlengang zwischen dem Beobachtungsbereich und der Ablenkungsvorrichtung schräg zur Flächennormalen verläuft.

Der Beobachtungsbereich kann mittels der Beleuchtungsvorrichtung zumindest dann ausleuchtbar sein, wenn ein Bild aufgenommen wird. In Weiterbildung kann der Beobachtungsbereich mittels der Beleuchtungsvorrichtung dauerhaft ausleuchtbar sein. Dies kann unter anderem dann von Vorteil sein, wenn die Kameravorrichtung eine Zeilenkamera umfasst. Ebenso kann auch ein Blitzbetrieb, bei dem die Beleuchtungsvorrichtung Blitzlichter erzeugt, von Vorteil sein, wenn zur Erkennung von Fremdkörpern unterschiedlicher Art alternierend mit Licht verschiedener Wellenlängen beleuchtet werden soll oder die Bewegung des Fasermaterials entlang des Beobachtungsbereich derart langsam ist, dass zwischen den einzelnen Bildaufnahmen das Licht nicht benötigt wird.

Insbesondere weist die Kameravorrichtung zumindest eine Kamera auf. Die Ablenkungsvorrichtung lenkt den Strahlengang von dem Beobachtungsbereich auf die zumindest eine Kamera um. Die Anzahl der eingesetzten Kameras hängt unter anderem von der Breite des Beobachtungsbereichs, der maximalen Erfassungsbreite der jeweiligen Kamera, der Größe des Innenraums, dem Abstand der Kameravorrichtung zum Beobachtungsbereich und dergleichen ab. Vorzugsweise weist die Kameravorrichtung genau eine oder zwei der Kameras auf. Zur Vergrößerung der Erfassungsbreite der jeweiligen Kamera kann diese möglichst weit nach oben im Innenraum platziert werden. Weiterhin kann die Brennweite des Objektivs reduziert werden. Dies kann allerdings zu einem großen Sichtwinkel hin zum Rand des Erfassungsbereich führen, was mit optischen Nachteilen verbunden sein kann. Bei Einsatz mehrerer der Kameras können diese in Richtung der Breite des Trennelements nebeneinander und insbesondere beabstandet zueinander angeordnet sein. Dabei können sich die Erfassungsbereiche benachbarter Kameras auch überschneiden, um eine lückenlose Abdeckung des Beobachtungsbereichs zu gewährleisten.

Die Kameravorrichtung kann weiterhin eine Auswerteeinheit, auch Bildauswerterechner genannt, aufweisen, welcher die Bilddaten der zugeordneten Kameravorrichtung analysiert. Die Auswerteeinheit ist vorzugsweise im Innenraum angeordnet. Grundsätzlich möglich ist aber auch, dass die Auswerteeinheit außerhalb des Innenraums angeordnet und beispielsweise an oder in der Aufbereitungsmaschine untergebracht ist. Die Auswerteeinheit analysiert die von der Kameravorrichtung empfangenen Bilddaten und stellt deren Auswerteergebnisse in Form zumindest eines Ausgabewerts bereit, der beispielsweise durch eine Steuereinheit der Aufbereitungsmaschine und/oder einer der Aufbereitungsmaschine vor- und/oder nachgeschalteten Spinnereivorbereitungsmaschine verwendet werden kann, um den Ausreinigungsgrad der jeweiligen Maschine beeinflussende Maschinenelemente zu verstellen. Auf diese Weise kann die Erkenntnis über einen sich verändernden Fremdkörperanteil im Fasermaterial genutzt werden, um die Ausreinigungseffizienz zu optimieren.

Die zumindest eine Kamera kann eine Zeilenkamera sein. Dies ermöglicht eine große Erfassungsbreite bzw. Erfassung über einen großen Sichtwinkel entlang der Zeile, die in der Richtung der Breite des Beobachtungsbereichs bzw. der Breite der Gehäuseöffnung ausgerichtet sein kann. Die Zeilenkamera nimmt das Bild Zeile für Zeile auf. Die einzelnen Bildzeilen können von der Auswerteeinheit zu einem fortlaufenden Bild zusammengefügt werden. Das Fasermaterial bewegt sich am Beobachtungsbereich vorbei und die Kameravorrichtung ist ortsfest an der Öffnungsverschlussvorrichtung gehalten, sprich die Kamera steht still. Der Erfassungsbereich, respektive das Bildfeld im Moment der Aufnahme ist ein Schlitz von der Breite des gewünschten Bildes, die vorzugsweise maximal der Breite des Trennelements entspricht. Dadurch benötigt die Zeilenkamera nur eine sehr geringe Bautiefe, sodass zum einen die Ablenkungsvorrichtung nah an dem Trennelement angeordnet sein kann und insgesamt die Öffnungsverschlussvorrichtung flach bauend ausgestaltet sein kann. Zudem kann der Beobachtungsbereich in der Höhe schmal sein und in der Breite entsprechend breit sein. Um optische Nachteile durch große Sichtwinkel an den Rändern zu vermeiden, ist von Vorteil, wenn der Sichtwinkel von der Kameramitte zu den Rändern des Bildes insbesondere bei maximal 15° liegen. Bei einer typischen Öffnungsverschlussvorrichtung für einen Reiniger, einen Mischer und dergleichen kann der Strahlengang respektive eine gesamte optische Weglänge von zumindest in etwa 550 Millimeter erreicht werden. Damit lässt sich ein Beobachtungsbereich von zumindest in etwa einer Breite von 300 Millimeter und einer Höhe von 0,3 Millimeter Höhe abdecken.

Grundsätzlich kann die zumindest eine Kamera auch eine Flächen- bzw. Matrixkamera sein und ebenso sind Kombinationen möglich, bei denen die Kameravorrichtung mindestens eine Zeilen- und mindestens eine Flächen- bzw. Matrixkamera umfasst. Die jeweilige Kamera kann in an sich bekannter Weise zumindest einen Bildsensor und ein Objektiv aufweisen. Die Ablenkungsvorrichtung kann je Kamera ein Ablenkungselement aufweisen, wobei grundsätzlich auch ein durchgehendes Ablenkungselement vorgesehen sein kann, auf das die Kameras ausgerichtet sein können.

Des Weiteren kann die Öffnungsverschlussvorrichtung einen oberen Abschnitt und einen vom oberen Abschnitt beabstandeten unteren Abschnitt aufweisen. Die Kameravorrichtung kann im oberen Abschnitt und der Beobachtungsbereich sowie die Ablenkungsvorrichtung können im unteren Abschnitt angeordnet sein, oder umgekehrt. Um den Abstand der Kameravorrichtung zur Ablenkungsvorrichtung und der Beobachtungsfläche insgesamt zu vergrößern, können weitere Bauteile, wie beispielsweise die Auswerteeinheit zum Bestimmen der Rohstoffqualität, insbesondere für das Erkennen von Fremdkörpern, insbesondere mit Helligkeits- und/oder Farbabweichungen, eine Steuereinheit und dergleichen in der Tiefe des Innenraums hintereinander angeordnet sein. Insbesondere kann die Auswerteeinheit und/oder die Steuereinheit zwischen der Kameravorrichtung und dem Deckelelement angeordnet sein.

Zum Abschotten des Beobachtungsbereichs vor Umgebungslicht oder Fremdlicht kann das Deckelelement in dem (insbesondere unteren bzw. oberen) Abschnitt, in dem der Beobachtungsbereich liegt, lichtundurchlässig ausgebildet sein. Dadurch werden störende Lichtreflektionen im Beobachtungsbereich vermieden.

Weiterhin kann die Öffnungsverschlussvorrichtung einen Sichtabschnitt aufweisen, der ober- und/oder unterhalb des Beobachtungsbereichs liegt. Mit anderen Worten liegt der Beobachtungsbereich, in dem das Deckelelement lichtundurchlässig gestaltet sein kann, außerhalb des Sichtabschnitts. In dem Sichtabschnitt kann das Trennelement und das Deckelement durchsichtig ausgebildet sein. Insbesondere ist der Sichtabschnitt zwischen dem oberen Abschnitt und dem unteren Abschnitt angeordnet. Vorzugsweise grenzt der Sichtabschnitt nach oben hin an den oberen Abschnitt und nach unten hin an den unteren Abschnitt unmittelbar an. Auf diese Weise bietet die Inspektionseinrichtung nicht nur die Möglichkeit zur optischen Inspizierung des Fasermaterials mittels der Kameravorrichtung, sondern kann zusätzlich als Beobachtungsöffnung genutzt werden, durch die ein menschlicher Bediener von außen in den Füllschacht der Aufbereitungsmaschine hineinsehen kann, um das am Trennelement der Öffnungsverschlussvorrichtung vorbeiziehende Fasermaterial in Augenschein nehmen zu können. Grundsätzlich kann der Sichtabschnitt auch der obere Abschnitt, in dem die Kameravorrichtung angeordnet sein kann, sein oder sich über den mittleren Abschnitt und den oberen Abschnitt erstrecken. Weiterhin kann auch das gesamte Deckelelement transparent gestaltet sein und kann beispielsweise aus einem durchsichtigen Glas- oder Kunststoffmaterial hergestellt sein. In Höhe des Beobachtungsbereichs, insbesondere im unteren Abschnitt der Öffnungsverschlussvorrichtung kann das aus dem transparenten Material gefertigte Deckelelement foliert, lackiert oder dergleichen sein, um den Beobachtungsbereich vor störendem Außenlicht abzuschotten.

Die Öffnungsverschlussvorrichtung kann ein Träger für weitere Hilfssensorik sein. Insbesondere kann an der Außenseite des Trennelements und/oder im Innenraum der Öffnungsverschlussvorrichtung eine Leerlaufüberwachung des Füllschachts angeordnet sein. Diese kann beispielsweise eine Lichtschranke oder einen Lichtaster umfassen.

Des Weiteren kann die Öffnungsverschlussvorrichtung einen Rahmen, der das Trennelement und das Deckelelement einfasst, aufweisen. Dadurch kann die Öffnungsverschlussvorrichtung zum Beispiel wie ein starrer Fensterflügel in der Gehäuseöffnung einsetzbar sein. Weiterhin können Gelenkmittel zum schwenkbaren Befestigen der Öffnungsverschlussvorrichtung, insbesondere des Rahmens am Gehäuse der Aufbereitungsmaschine im Bereich der Gehäuseöffnung vorgesehen sein. Dadurch kann die Öffnungsverschlussvorrichtung ausgestaltet sein, um wie ein schwenkbarer Fensterflügel, ein schwenkbarer Türflügel, eine schwenkbare Klappe oder dergleichen in der Gehäuseöffnung eingesetzt zu werden. Statt einer gelenkigen Anordnung kann die Öffnungsverschlussvorrichtung auch starr respektive unbeweglich, beispielsweise wie ein starres Fenster, in der Gehäuseöffnung eingesetzt sein.

Vorzugsweise ist die Inspektionseinrichtung als eine Baueinheit handhabbar, die wie ein Fenster, eine Tür oder dergleichen in die Gehäuseöffnung eingesetzt werden kann. Die Inspektionseinrichtung kann somit als intelligente Wartungstür oder intelligentes Wartungsfenster bezeichnet werden. Für den Betrieb der Inspektionseinrichtung kann diese an eine elektrische Versorgung insbesondere der Aufbereitungsmaschine angeschlossen werden. Weiterhin können Mittel zur Datenübertragung vorgesehen sein.

Beispielsweise kann die Kameravorrichtung eine Schnittstelle zum Verbinden mit der Auswerteeinheit und/oder der Steuereinheit aufweisen. Die Inspektionseinrichtung kann die Auswerteeinheit umfassen, die insbesondere im Innenraum der Öffnungsverschlussvorrichtung untergebracht sein kann. Die Steuereinheit kann eine Steuereinheit der Aufbereitungsmaschine oder eine übergeordnete Anlagensteuerung oder sein.

Die Wartungsfenster, die durch die Inspektionseinrichtung ersetzt werden können, weisen üblicherweise eine Außenbreite von zumindest in etwa 400 Millimeter und eine Außenhöhe von zumindest in etwa 800 Millimeter auf. Vorzugsweise sind die Außenmaße der Inspektionseinrichtung derart gewählt, dass die Inspektionseinrichtung statt der Wartungsfenster in die vorhandene Gehäuseöffnung eingesetzt werden kann. Insbesondere kann die Inspektionseinrichtung, insbesondere die Öffnungsverschlussvorrichtung eine Außenbreite zwischen 200 Millimeter und 600 Millimeter und eine Außenhöhe zwischen 400 Millimeter und 1200 Millimeter aufweisen. Vorzugsweise liegt die Außenbreite in einem Bereich von 300 Millimeter und 500 Millimeter und die Außenhöhe in einem Bereich von 600 Millimeter und 1000 Millimeter.

Die Inspektionseinrichtung wird somit zum Verschließen von einer in einer Aufbereitungsmaschine bereits vorhandenen Gehäuseöffnung verwendet, über die ein Füllschacht für Fasermaterial von außen einsehbar ist.

Die Verwendung basiert auf dem Grundgedanken, dass eine herkömmliche Aufbereitungsmaschine stets zumindest eine Gehäuseöffnung aufweist, in der für gewöhnlich ein Beobachtungsfenster oder dergleichen eingesetzt ist, über welches der Bediener der Maschine von außen in den Füllschacht hineinschauen kann. Erfindungsgemäß wird statt des herkömmlichen Sichtfensters die Inspektionseinrichtung in die bereits vorhandene Gehäuseöffnung eingesetzt.

Vorzugsweise wird die Inspektionseinrichtung an einer Aufbereitungsmaschine eingesetzt, in deren Füllschacht das Fasermaterial zumindest kurzzeitig aufgestaut wird. Dann kann das Fasermaterial langsam an der Inspektionseinrichtung vorbeiziehen, wobei auch ein insbesondere kurzzeitiges Ruhen des Fasermaterials hinnehmbar ist. Dadurch wird die Erfassung von Qualitätsdaten, wie dem Fremdkörpergehalt optimiert. Das Fasermaterial kann in dem Füllschacht in Flockenform vorliegen.

Die Aufbereitungsmaschine kann eine Spinnereivorbereitungsmaschine, insbesondere ein Ballenöffner, beispielsweise Trützschler Universal Ballenöffner BO-U, ein Reiniger, beispielsweise Trützschler Universalreiniger CL-U, ein Öffner, beispielsweise Trützschler Universalöffner TO-U, ein Mischer, beispielsweise Trützschler Universal Mischer MX-U, ein Flockenmischer, beispielsweise Trützschler T-Blend, eine Karde, beispielsweise Trützschler TC21, und dergleichen sein. Weiterhin kann die Aufbereitungsmaschine aus dem Bereich der Vliesstoffproduktion sein, wie zum Beispiel ein Öffner, beispielsweise Trützschler FeinöffnerTBL-FB bzw. TBL-FO, eine Mischkammer, beispielsweise TrützschlerTBL-BB, eine Krempel, beispielsweise Trützschler TWF-NC, und dergleichen.

Im Betrieb einer solchen Aufbereitungsmaschine zieht das Fasermaterial langsam an der Außenseite des Trennelements vorbei. Insbesondere ist der Füllschacht ein Füllschacht, an dessen Unterseite eine Dosiervorrichtung angeordnet ist, um das Fasermaterial dosiert aus dem Füllschacht entnehmen zu können. Die Dosiervorrichtung kann beispielsweise ein Walzeneinzug und/oder eine Öffnungswalze sein. In dem Füllschacht liegen die Transportgeschwindigkeiten, mit denen das Fasermaterial am Beobachtungsbereich vorbeizieht, im Bereich von wenigen Millimetern pro Minute bis hin zu wenigen Zentimetern pro Minute. Üblicherweise liegt die Transportgeschwindigkeit in einem Bereich von 20 und 800 Millimeter pro Minute.

Möglich ist auch, dass der Materialfluss des Fasermaterials kurzzeitig stoppt. Um bei diesen langsamen Transportgeschwindigkeiten die Erkennung von Qualitätsmerkmalen, wie der Fremdkörpergehalt, zu optimieren, kann es von Vorteil sein, wenn die Aufbereitungsmaschine mit mehreren der Inspektionseinrichtungen ausgestattet ist. Insbesondere können je Füllschacht zwei der Inspektionseinrichtungen vorgesehen sein, die einander zugewandt an einer Vorder- und einer Rückseite der Aufbereitungsmaschine angeordnet sind.

Weiterhin kann in dem zumindest einen Füllschacht ein Drucksensor zum Messen eines Staudrucks angeordnet sein. Mit Hilfe des gemessenen Staudruckes kann der Ausgabewert der Auswerteeinheit auf eine vom Staudruck unabhängige Kenngröße korrigiert werden. Hierfür kann in der Auswerteeinheit eine Kalibrierkurve hinterlegt sein. Denn die Anzahl der im Beobachtungsbereich bzw. in dem von der Kameravorrichtung aufgenommen Bild sichtbaren Fremdkörper hängt erheblich von der Materialauflösung des Fasermaterials ab. Eine lockere gut aufgelöste Materialschichtung wird in dem Füllschacht der Kameravorrichtung eine geringe Anzahl von Fremdkörpern präsentieren. Wird dagegen das Material in dem Füllschacht durch die Beaufschlagung von Transportluft mit einem höheren Druck verdichtet, so zeigen sich in dem Beobachtungsbereich bzw. dem Bild, und damit in der gleichen Fläche, erheblich mehr Fremdkörper. Somit kann ein schwankender Staudruck die Erfassung des Fremdkörpergehaltes erheblich verfälschen. Der zumindest eine Drucksensor kann oberhalb eines vorgegebenen maximalen Füllstands des zumindest einen Füllschacht angeordnet sein. Die zumindest eine Inspektionseinrichtung kann unterhalb des maximalen Füllstands angeordnet sein. Zur Vorgabe des maximalen Füllstands kann in dem zumindest einen Füllschacht eine Lichtschranke oder ein Lichttaster angeordnet sein. Der maximale Füllstand kann durch eine Einbauhöhe der Lichtschranke bzw. des Lichttasters bestimmt sein.

Eine noch weitere Lösung der oben genannten Aufgabe besteht in einer Anlage umfassend mehrere der vorbeschriebenen Aufbereitungsmaschinen. Durch die erfindungsgemäße Anlage ergeben sich dieselben Vorteile, wie sie im Zusammenhang mit der erfindungsgemäßen Inspektionseinrichtung bzw. Verwendung bzw. Aufbereitungsmaschine beschrieben worden sind, sodass hier abkürzend auf obige Beschreibung Bezug genommen wird. Dabei versteht es sich, dass alle genannten Ausgestaltungen auf die Anlage übertragbar sind und umgekehrt.

Auf diese Weise können innerhalb der Anlage mehrere der Aufbereitungsmaschinen, insbesondere sämtliche der Maschinen, mit jeweils zumindest einem der Inspektionseinrichtungen ausgestattet sein. Damit können an mehreren Prozessstellen innerhalb der Anlage definierte Qualitätsmerkmale des Fasermaterials, wie beispielsweise der Fremdkörpergehalt, analysiert werden. Dadurch können abhängig von der erfassten Rohstoffqualität nachfolgende Maschinen automatisiert an Veränderungen der Rohstoffqualität angepasst werden. Mit anderen Worten sind zur automatischen Optimierung der Anlage die Inspektionseinrichtungen vorgesehen, die das Fasermaterial in den Aufnahmeräumen der Aufbereitungsmaschinen hinsichtlich vorgegebener Qualitätsmerkmale, wie den Fremdkörpergehalt, auch Störpartikelgehalt genannt, analysieren, sodass abhängig von dem erfassten Qualitätsmerkmal vorgeschaltete und/oder nachgeschaltete Spinnereivorbereitungsmaschine automatisiert an Veränderungen der Rohstoffqualität angepasst werden können.

In zweckmäßiger Weise decken die Aufbereitungsmaschinen der Anlage eine Verarbeitungslinie in einer Spinnereivorbereitung ab, sodass die Anlage Aufbereitungsmaschinen unterschiedlicher Art umfassen kann. Auf diese Weise kann die Qualität des Fasermaterials an mehreren Prozessstellen der Verarbeitungslinie erfasst werden, um während des Aufbereitungsprozesses durch Anpassung von Einstellungen an den Aufbereitungsmaschinen auf die sich ändernde Rohstoffqualität reagieren zu können.

Des Weiteren kann vorgesehen sein, dass zumindest eine der Aufbereitungsmaschinen oder die Anlage zumindest eine Abfallsensoreinrichtung aufweist, die konfiguriert sein kann, eine Abfallzusammensetzung eines aus dem Fasermaterial ausgeschiedenen, Fremdkörper und Gutfasern umfassenden Abfallmaterials mittels zumindest eines optischen Sensors zu analysieren. Durch Integration der Abfallsensoreinrichtung in die Aufbereitungsmaschine ist es möglich, zu unterscheiden, ob die Rohstoffqualität schlechter wird oder ob sich die Ausreinigungseffizienz der Aufbereitungsmaschine verschlechtert hat. Mittels der Inspektionseinrichtung wird die Rohstoffqualität überwacht, wogegen die Abfallsensoreinrichtung die Abfallzusammensetzung überwacht.

Eine solche Abfallsensoreinrichtung ist zum Beispiel aus der Patentschrift DE 103 49 407 B4 bekannt. Der zumindest eine optische Sensor kann in einer Abfallleitung insbesondere der Aufbereitungsmaschine angeordnet sein. Der zumindest eine optische Sensor kann die Häufigkeit- der Materialabscheidung, also auch die Abfallzusammensetzung, ermitteln und kann zwischen gewünschtem Abfall (die Fremdkörper) und unerwünschtem Abfall (die Fasern) unterscheiden. Vorzugsweise kann die Aufbereitungsmaschine automatisch Einstellungen an eine Abfallausscheidung beeinflussende Maschinenelemente respektive Reinigungselementen vornehmen. Einfluss auf die Abfallausscheidung kann beispielsweise bei einem Vorreiniger die Drehgeschwindigkeit der Öffnungswalze oder die Öffnungsweite eines Ausscheidegitters haben. Weiterhin möglich sind sich verstellende Abscheidemesser, die an einer Öffnungswalze tangential ansetzen, verstellbare Flügel, Absaughauben etc. Darüber hinaus können die Aufbereitungsmaschinen mit einer Vielzahl weiterer verstellbarer Reinigungselemente ausgestattet sein.

Eine noch weitere Lösung der oben genannten Aufgabe besteht in einem Verfahren zur optischen Inspektion von Fasermaterial in der vorbeschriebenen Aufbereitungsmaschine oder in der vorbeschriebenen Anlage, wobei das Verfahren folgende Schritte umfasst: Aufnehmen von Bildern des am Beobachtungsbereich vorbeiziehenden Fasermaterials bzw. dessen Fasermaterialoberfläche mittels der Kameravorrichtung der jeweiligen Inspektionseinrichtung; Auswerten der aufgenommenen Bilder durch zumindest eine Auswerteeinheit zur Bestimmung eines Qualitätsmerkmals des Fasermaterials, insbesondere eines aktuellen Fremdkörpergehalts; Ausgeben eines Ausgabewerts, welcher insbesondere den aktuellen Fremdkörpergehalt im Fasermaterial umfasst. Durch das erfindungsgemäße Verfahren ergeben sich dieselben Vorteile, wie sie im Zusammenhang mit der erfindungsgemäßen Inspektionseinrichtung bzw. Verwendung bzw. Aufbereitungsmaschine bzw. Anlage beschrieben worden sind, sodass hier abkürzend auf obige Beschreibung Bezug genommen wird. Dabei versteht es sich, dass alle genannten Ausgestaltungen auf das Verfahren übertragbar sind und umgekehrt.

Die Bilder können in kontinuierlichen Zeitabständen erzeugt werden. Des Weiteren kann das Verfahren zumindest einen der folgenden Schritte umfassen: Vergleichen des Ausgabewerts mit zumindest einem vorgegebenen und/oder vorherigen Ausgangswert, insbesondere Fremdkörpergehalt; Bestimmen der aktuellen Abfallzusammensetzung durch die zumindest eine Abfallsensoreinrichtung, wenn der Ausgabewert außerhalb eines definierten Bereichs um den zumindest einen vorgegebenen und/oder vorherigen Ausgangswert liegt; Vergleichen der aktuellen Abfallzusammensetzung mit einem vorgegebenen und/oder vorherigen Abfallwert. Der definierte Bereich kann Null sein, sodass jede Abweichung von dem Ausgangswert eine Bestimmung der aktuellen Abfallzusammensetzung anstößt. Ebenso kann der Bereich auch einer prozentualen Abweichung von beispielsweise plus und/oder minus 10 Prozent entsprechen, wobei je nach Anforderungen des Betreibers an die Aufbereitungsmaschine auch ein größerer oder kleinerer Bereich einstellbar sein kann.

Das Verfahren kann weiterhin den Schritt der automatischen Veränderung von Einstellungen zumindest einem Reinigungselement bzw. zumindest einem eine Abfallausscheidung beeinflussenden Maschinenelement der jeweiligen Aufbereitungsmaschine und/oder einer der jeweiligen Aufbereitungsmaschine nachgeschalteten Spinnereivorbereitungsmaschine und/oder einer der jeweiligen Aufbereitungsmaschine vorgeschalteten Spinnereivorbereitungsmaschine umfassen, wenn der Ausgabewert außerhalb eines definierten Bereichs um den zumindest einen vorgegebenen und/oder vorherigen Ausgangswert liegt und/oder die aktuelle Abfallzusammensetzung von einem vorgegebenen und/oder vorherigen Abfallwert abweicht. Dies ermöglicht eine besonders effiziente Ausregelung von Qualitätsschwankungen, insbesondere bei Änderungen des Fremdkörpergehaltes im Rohstoff. Analog zum vorstehend ausgeführten kann der jeweilige definierte Bereich Null sein oder einer prozentualen Abweichung von beispielsweise plus und/oder minus 10 Prozent entsprechen, wobei je nach Anforderungen des Betreibers an die Aufbereitungsmaschine auch ein größerer oder kleinerer Bereich einstellbar sein kann.

Lediglich beispielhaft sei angenommen, im laufenden Betrieb der Aufbereitungsmaschine ließe zum einen die Rohstoffqualität nach und zum anderen würde die Ausreinigungseffizienz der Aufbereitungsmaschine abnehmen, so würde die Abnahme der Rohmaterialqualität ohne die Inspektionseinrichtung unbemerkt bleiben. Ein anderes Szenario wäre, dass die Menge der ausgeschiedenen Fremdkörper an den Reinigungsstellen abnimmt, was durch die Messung der Abfallzusammensetzung feststellbar wäre. Daraus kann jedoch nicht abgeleitet werden, ob das Rohmaterial sauberer geworden ist oder ob eine der Aufbereitungsmaschinen, insbesondere der Reiniger neu optimiert werden müsste. Vorzugsweise ist die Abfallsensoreinrichtung konfiguriert, bei veränderter Rohstoffqualität, die von der zumindest einen Inspektionseinrichtung erkannt wurde, einen Optimierungslauf durchzuführen. Eine optimale Einstellung ist somit material- und verschmutzungsabhängig und kann bei veränderten Eigenschaften des Rohstoffes im Betrieb anpassbar sein.

Die Abfallsensoreinrichtung kann konfiguriert sein, den Optimierungslauf durchzuführen, bei dem das zumindest eine Reinigungselement in eine erste Endlage, in der keine Fremdteile abgeschieden werden, schrittweise hin zu einer zweiten Endlage verfährt, in der Fremdteile und Fasern abgeschiedenen werden. Denn die Reinigungswirkung der Aufbereitungsmaschine ist abhängig von der Einstellung derer Reinigungselemente. Die Sensorsignale werden erfasst und ausgewertet. Ab dem Punkt, wo gegenüber dem Anteil der Fremdkörper unverhältnismäßig viel Fasermaterial mit abgeschieden wird, kann der Optimierungslauf beendet sein. Zum Beispiel kann bei einem Reiniger, wie dem Reiniger CL-U von Trützschler, ein erstes Reinigungselement in Form eines Messers tangential verschoben werden, sodass eine Reinigungsstelle geöffnet bzw. ganz oder teilweise verschlossen werden kann. Ein zweites Reinigungselement, welches ein schwenkbarer Flügel sein kann, kann um seinen Drehpunkt gedreht werden, sodass auch hier eine Reinigungsstelle geöffnet bzw. ganz oder teilweise verschlossen werden kann. Auf diese Weise wird in der ersten Endlage nur eine geringe oder keine Reinigungswirkung erzielt und in der zweiten Endlage kann die Reinigungswirkung zwar besser sein, aber es können neben den Fremdkörpern auch zu viele Gutfasern mit in den Abfall gelangen.

Weitere Merkmale und Vorteile der Erfindung ergeben sich aus der nachfolgenden Beschreibung bevorzugter Ausführungsformen. Darin werden Merkmale, die im Wesentlichen oder funktionell gleich oder ähnlich sind, mit denselben Bezugszeichen versehen. Es zeigen:
- Figur 1: eine schematisch vereinfacht dargestellte Aufbereitungsmaschine gemäß einer ersten Ausführungsform der Erfindung, wobei die erfindungsgemäße Aufbereitungsmaschine eine Inspektionseinrichtung mit einer Kamera, einer Ablenkungsvorrichtung und zwei Beleuchtungselementen umfasst;
- Figur 2: eine teilgeschnittene Seitenansicht der Aufbereitungsmaschine;
- Figur 3: eine vergrößerte Teildarstellung der Aufbereitungsmaschine in schematisch vereinfachter Schnittansicht;
- Figur 4: eine vergrößerte Teildarstellung der Aufbereitungsmaschine im Bereich der Inspektionseinrichtung, wobei die Kamera mit einer ersten Brennweite eingestellt ist;
- Figur 5: die vergrößerte Teildarstellung aus Figur 4, wobei die mit einer zweiten Brennweite eingestellt ist;
- Figur 6: eine schematische Darstellung eines Ablaufdiagramms der Aufbereitungsmaschine in einem Automatikbetrieb;
- Figur 7: eine schematische Darstellung eines Teilschritts des Ablaufdiagramms aus Figur 6, der die Ermittlung eines Fremdkörpergehalts im Fasermaterial betrifft;
- Figur 8: eine schematische Darstellung eines weiteren Teilschritts des Ablaufdiagramms aus Figur 6, der die Durchführung eines Optimierungslaufs betrifft;
- Figur 9: eine vergrößerte Teildarstellung einer Aufbereitungsmaschine gemäß einer alternativen Ausführungsform in schematisch vereinfachter Schnittansicht, wobei die Aufbereitungsmaschine mehrere der Inspektionseinrichtungen umfasst;
- Figur 10: eine vergrößerte Teildarstellung der Aufbereitungsmaschine im Bereich einer Inspektionseinrichtung gemäß einer alternativen Ausführungsform mit zwei Kameras;
- Figur 11: eine vergrößerte Teildarstellung der Aufbereitungsmaschine gemäß einer noch weiteren Ausführungsform in schematisch vereinfachter Schnittansicht; und
- Figur 12: eine Seitenansicht einer Aufbereitungsmaschine gemäß einer weiteren Ausführungsform der Erfindung.

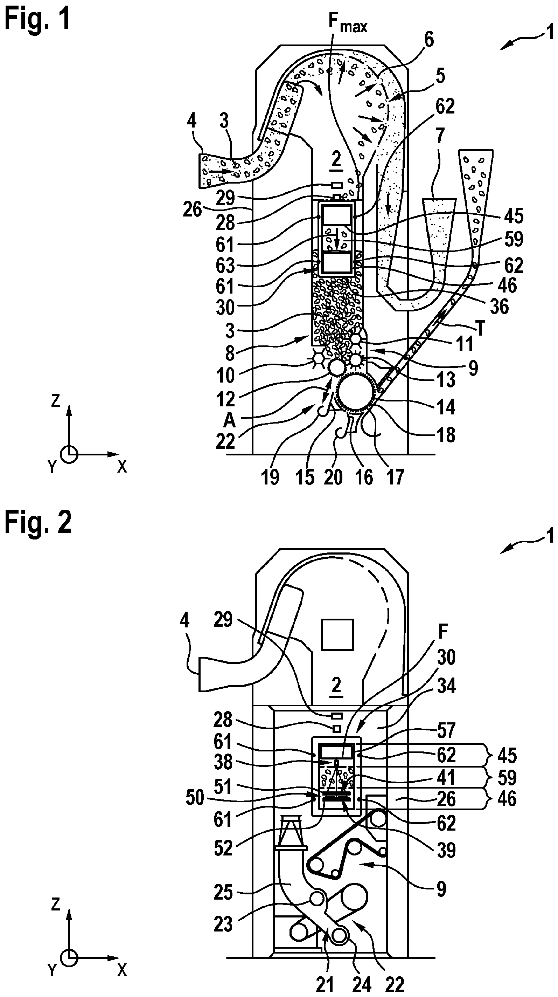

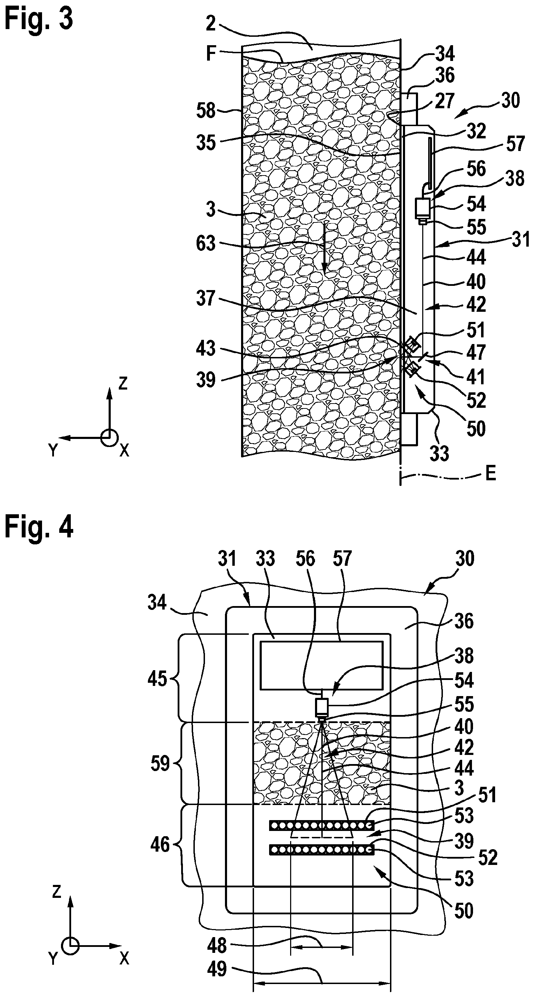

In den Figuren 1 und 2 ist eine Aufbereitungsmaschine 1 gemäß einer ersten Ausführungsform der vorliegenden Erfindung gezeigt, die als Reinigungsmaschine, sprich Reiniger ausgebildet ist. Weitere Details und mögliche Abwandlungen sind in den Figuren 3 bis 5 dargestellt. In den Figuren sind zur Verdeutlichung der Ausrichtung der Aufbereitungsmaschine 1 im Raum eine Längsrichtung X, eine Querrichtung Y und eine Hochrichtung Z eingezeichnet, die im Sinne eines der Aufbereitungsmaschine 1 zugeordneten kartesischen Koordinatensystems definiert und durch entsprechende Pfeile angegeben sind. Begriffe wie "unten", "unterhalb", "oben" oder "oberhalb" stellen dabei räumliche Angaben in Bezug auf Hochrichtung Z dar. Die Aufbereitungsmaschine 1 kann auf einem ortsfesten Boden aufgestellt sein, der in einer von der Längsrichtung X und der Querrichtung Y aufgespannten horizontalen Ebene liegt.

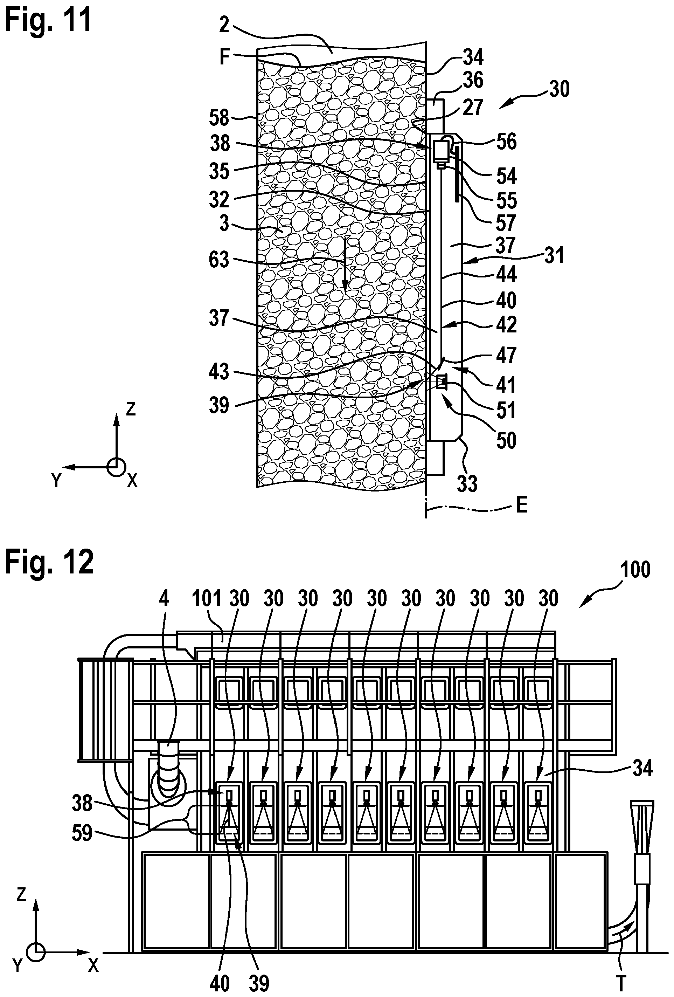

In der Figur 1 ist erkennbar, dass die Aufbereitungsmaschine 1 einen Füllschacht 2 aufweist. Der Füllschacht 2 ist an einen Einlass 4 angeschlossen, über den üblicherweise in Flockenform bereitgestelltes Fasermaterial 3 von einer vorgelagerten Aufbereitungsmaschine, beispielsweise einem in der Figur 12 gezeigten Mischer, hier der Trützschler Universal Mischer MX-U, pneumatisch eingebracht werden kann. In einem oberen Teil 5 des Füllschachts 2 ist eine Entstaubungsvorrichtung 6, die Staub und Transportluft vom Fasermaterial 3 trennt, angeordnet. Die Transportluft wird über eine Abluftleitung 7 abgeführt und das Fasermaterial 3 fällt in einen unteren Teil 8 des Füllschachts 2, in dem es im Betrieb der Aufbereitungsmaschine 1 aufgestaut wird. Hierzu ist im unteren Teil 8 eine Dosiervorrichtung, hier, in Form eines Walzeneinzugs 9 angeordnet, der, hier beispielhaft, zwei langsam umlaufende und in deren Drehrichtungen einander entgegengerichtete Zuführwalzen 10, 11 und unterhalb der Zuführwalzen 10, 11 zwei langsam umlaufende und in deren Drehrichtungen einander entgegengerichtete Einzugswalzen 12, 13 aufweist. Die Einzugswalzen 12, 13 bilden den Boden des Füllschachts 2, unter dem eine Öffnungswalze 14 angeordnet ist.

Der Öffnungswalze 14 sind in deren Drehrichtung nacheinander ein erstes Reinigungselement 15 und ein zweites Reinigungselement zugeordnet. Eine solche Anordnung ist in der Offenlegungsschrift DE 10 2012 012 254 A1 von der Anmelderin beschrieben, die vollumfänglich einbezogen bzw. auf die hiermit Bezug genommen wird. Das erste Reinigungselement 15 ist zumindest im Wesentlichen tangential in Bezug auf einen Spitzenkreis 17 einer Garnitur 18 der Öffnungswalze 14 entlang des Doppelpfeils A verschiebbar, um den Durchlass der Reinigungsstelle einzustellen. Über Absaughauben 19, 20 gelangt das von den Reinigungselementen 15, 16 abgeschiedene Abfallmaterial in einen Abfallstrang 21. In Drehrichtung der Öffnungswalze 14 hinter dem zweiten Reinigungselement 16 schließt sich wiederum ein Rohrleitungssystem an, über das das gereinigte Fasermaterial 3 an eine nachfolgende Aufbereitungsmaschine (nicht gezeigt), beispielsweise ein Fremdteilausscheider, wie der Trützschler SP-FPU, T-Scan TS-T3 oder T-Scan TS-T5, abtransportiert werden kann. Eine Transportrichtung des gereinigten Fasermaterials 3 hin zur nachfolgenden Aufbereitungsmaschine ist in der Figur 1 mit dem Pfeil T verdeutlicht.

In der Figur 2 ist erkennbar, dass das über die Absaughauben 19, 20 in den Abfallstrang 21 abgesaugte Abfallmaterial an einer Abfallsensoreinrichtung 22 vorbeigeführt wird. Die Abfallsensoreinrichtung 22 weist eine optische Messeinrichtung mit je Absaughaube 19, 20 einem Sensor 23, 24, insbesondere einem Helligkeitssensor auf, der über jeweils eine durchsichtige Trennwand in die jeweilige Absaughaube 19, 20 hineinschaut. Mittels der Sensoren 23, 24 kann das über die Absaughauben 19, 20 durch einen Abfallkanal 25 des Abfallstrangs 21 abtransportierte Abfallmaterial erfasst werden, um innerhalb der vorbeifliegenden Fasern Gutfasern im Abfallstrom zu erkennen. Durch Auswertung der Messergebnisse kann der Anteil von Gutfasern im Abfallmaterial bzw. die Abfallzusammensetzung des Fremdkörper und Gutfasern umfassenden Abfallmaterials bestimmt werden.

Oberhalb des Walzeneinzugs 9 ist in einem den Füllschacht 2 umschließenden Gehäuse 26 der Aufbereitungsmaschine 1 eine Gehäuseöffnung 27 ausgebildet. Oberhalb der Gehäuseöffnung 27 ist eine mit einer Maschinensteuerung (nicht gezeigt) verbundene Lichtschranke 28 oder ein Lichttaster angeordnet, der als Füllstandbegrenzung dient. Sobald ein Füllstand F des Fasermaterials 3 im Füllschacht 2 bis zur Einbauhöhe der Lichtschranke 28 ansteigt, wird eine Zuspeisung von Fasermaterial 3 hin zur Aufbereitungsmaschine 1 unterbrochen, bis der Füllstand F wieder abgesunken ist. Auf diese Weise gibt die Einbauhöhe den maximalen Füllstand Fₘₐₓ vor. Weiterhin ist oberhalb der Lichtschranke 28 ein Drucksensor 29 im Füllschacht 2 angeordnet, der als Differenzdrucksensor ausgestaltet sein kann, um die Differenz zwischen dem im Füllschacht 2 herrschenden Raumdruck und dem außerhalb des Füllschachts 2 herrschenden Umgebungsdruck zu messen. Dadurch kann der Einfluss des Staudrucks aufgrund der in den Füllschacht 2 einströmenden Transportluft, die von oben auf das Fasermaterial 3 drückt und dieses verdichtet, bestimmt werden. Statt eines Differenzdrucksensors können auch zwei getrennte Drucksensoren verwendet werden.

In die Gehäuseöffnung 27 des Gehäuses 26 der Aufbereitungsmaschine 1 ist eine Inspektionseinrichtung 30 eingesetzt, deren Aufbau und Funktionsweise nachstehend im Detail erläutert wird. In den Figuren 1 und 2 ist erkennbar, dass die Inspektionseinrichtung 30, hier beispielhaft, als schwenkbare Zugangs-, respektive Inspektionstür ausgebildet ist, die mittels Gelenkmittel 61 an dem Gehäuse 26 angelenkt ist. Weiterhin können mechanische Verriegelungsmittel 62 vorgesehen sein, um die Inspektionseinrichtung 30 in deren geschlossenem Zustand verriegeln zu können. Grundsätzlich kann die Inspektionseinrichtung 30 auch ein feststehendes Fenster sein, dass keine Gelenkmittel 61 und keine Verriegelungsmittel 62 aufweist.

In der Figur 3 ist erkennbar, dass die Inspektionseinrichtung 30 eine Öffnungsverschlussvorrichtung 31 aufweist, die ein Trennelement 32 und ein Deckelelement 33 umfasst. Das Trennelement 32 ist plattenartig gestaltet und kann bündig mit einer die Gehäuseöffnung 27 umgebenden Gehäusewand 34 des Füllschachts 2 abschließen. Im Betrieb der Aufbereitungsmaschine 1 zieht bzw. streicht das Fasermaterial 3 an der Innenseite der Gehäusewand 34 und einer zum Füllschacht 2 weisenden Außenseite 35 des Trennelements 32 in Richtung des Pfeils, der mit dem Bezugszeichen 63 versehen ist, vorbei. Weiterhin kann die Öffnungsverschlussvorrichtung 31 einen das Trennelement 32 und das Deckelelement 33 einfassenden Rahmen 36 zum Befestigen der Öffnungsverschlussvorrichtung 31 am Gehäuse 26 aufweisen. Die Öffnungsverschlussvorrichtung 31 kann damit wie ein feststehendes Fenster verwendet werden, wobei grundsätzlich auch Schwenk- oder Klappmittel zur Ausgestaltung der Öffnungsverschlussvorrichtung 31 als schwenkbares Fenster bzw. Klappe möglich sind. Ebenso kann der Rahmen 36 mehrteilig sein und einen am Gehäuse 26 feststehenden Rahmenteil und einen davon trennbaren Rahmenteil, der die Einheit aus dem Trennelement 32 und dem Deckelelement 33 umfasst, aufweisen, um diese Einheit auf einfache Weise entfernen und dadurch den Zugang zum Füllschacht 2 für Kontroll- oder Wartungsarbeiten bereitstellen zu können. Zwischen dem Trennelement 32 und dem Deckelelement 33 ist ein Innenraum 37 ausgebildet. Zum Abdichten der Gehäuseöffnung 27 sowie des Innenraums 37 gegen Staub und Feuchtigkeit können in an sich bekannter Weise Dichtungen (nicht gezeigt) vorgesehen sein.

In dem Innenraum 37 der Öffnungsverschlussvorrichtung 31 ist eine Kameravorrichtung 38 angeordnet, um Bilder von dem Fasermaterial 3, welches im Füllschacht 2 an einem definierten Beobachtungsbereich 39 des Trennelements 32 in Richtung des Pfeils 63 vorbeizieht, aufnehmen zu können. Hierzu ist das Trennelement 32 im Beobachtungsbereich 39 durchsichtig ausgebildet, wobei, wie hier beispielhaft gezeigt, die gesamte Fläche des Trennelements 32 durchsichtig ausgebildet ist. Die Außenseite 35 des Trennelements 32 definiert eine Beobachtungsebene E, zu der eine optische Achse 40 der Kameravorrichtung 38 parallel ausgerichtet ist. Weiterhin ist im Innenraum 37 der Öffnungsverschlussvorrichtung 31 eine Ablenkungsvorrichtung 41 aufgenommen, die im Blickfeld der Kameravorrichtung 38 angeordnet ist und einen vom Beobachtungsbereich 39 ausgehenden Strahlengang 42 hin zur Kameravorrichtung 38 umgelenkt. Die Ablenkungsvorrichtung 41 umfasst, hier beispielhaft, einen Spiegel mit einer reflektierenden Oberfläche 47. Der Einfalls- bzw. Ausfallswinkel jeweils beträgt 45 Grad, sodass eine Umlenkung des Strahlengangs 42 um 90 Grad erfolgt. In der Figur 3 ist erkennbar, dass ein erster Strahlengangabschnitt 43 des Strahlengangs 42 senkrecht zur Beobachtungsebene E verläuft und der Strahlengang 42 nach Umlenkung einen parallel zur optischen Achse 40 ausgerichteten zweiten Strahlengangabschnitt 44 aufweist.

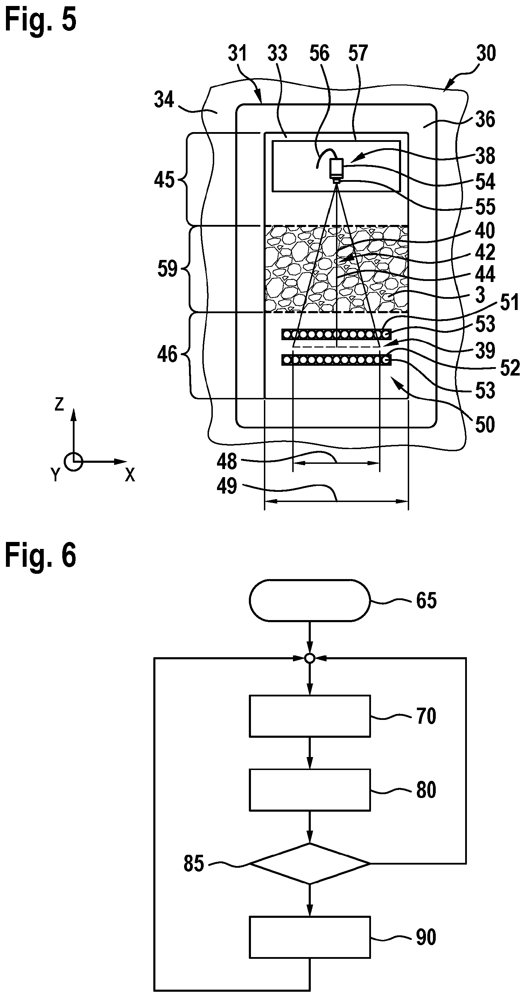

Die Kameravorrichtung 38 ist, hier beispielhaft, in einem oberen Abschnitt 45 der Öffnungsverschlussvorrichtung 31 angeordnet. Die beabstandet zur Kameravorrichtung 38 angeordnete Ablenkungsvorrichtung 41 ist, hier entsprechend, in einem unterem Abschnitt 46 der Öffnungsverschlussvorrichtung 31 untergebracht, in dem auch der Beobachtungsbereich 39 ausgebildet ist. Grundsätzlich ist auch eine umgekehrte Anordnung möglich, bei der die Kameravorrichtung 38 im unteren Abschnitt 46 und die Ablenkungsvorrichtung 41 sowie der Beobachtungsbereich 39 im oberen Abschnitt 45 angeordnet sein können. Durch Einstellen des Abstands zwischen der Kameravorrichtung 38 und der Ablenkungsvorrichtung 41 kann eine Erfassungsbreite 48 der Kameravorrichtung 38, sprich eine Breite der Scanlinie, vorgegeben werden, die in zweckmäßiger Weise maximal einer lichten Breite 49 des Rahmens 36 entspricht. In den Figuren 4 und 5 ist die Kameravorrichtung 38 in zwei unterschiedlichen Abständen zur Ablenkungsvorrichtung 41 angeordnet. In der jeweiligen Position ist die Kameravorrichtung 38 fixiert. Im Innenraum 37 kann eine Führungsvorrichtung (nicht gezeigt), die beispielsweise eine Schiene, Stange, eine Platte mit einem Lochmuster oder dergleichen umfassen kann, vorgesehen sein, um die Kameravorrichtung 38 ausrichten und die Inspektionsbreite über den Abstand zur Ablenkungsvorrichtung 41 einstellen zu können.

Zum Beleuchten des am Beobachtungsbereich 39 vorbeiziehenden Fasermaterials 3 ist im Innenraum 37 der Öffnungsverschlussvorrichtung 31 eine Beleuchtungsvorrichtung 50 angeordnet. Die Beleuchtungsvorrichtung 50 weist ein oberes Beleuchtungselement 51 und ein unteres Beleuchtungselement 52 auf, die den Beobachtungsbereich 39 von schräg oben bzw. unten beleuchten. Der Beobachtungsbereich 39 ist somit zwischen den beiden Beleuchtungselementen 51, 52 angeordnet. Entlang der optischen Achse 40 ist die Ablenkungsvorrichtung 41 zwischen der Kameravorrichtung 38 und dem unteren Beleuchtungselement 52 angeordnet und das obere Beleuchtungselement 51 zwischen der Kameravorrichtung 38 und der Ablenkungsvorrichtung 41 angeordnet. Die beiden Beleuchtungselemente 51, 52 sind leistenartig ausgebildet und erstrecken sich zumindest über die Erfassungsbreite 48 der Kameravorrichtung 38. Die Beleuchtungselemente 51, 52 können eine Vielzahl an LED-Lichtquellen 53 mit Linsen umfassen. Zur Vermeidung von Lichtreflektionen weichen die Einstrahlwinkel von der Flächennormale der Beobachtungsebene E ab und schneiden die Beobachtungsebene E, hier beispielhaft, in einem Bereich zwischen 20 Grad und 80 Grad. Zum Abschotten des Beobachtungsbereichs 39 vor Umgebungslicht oder Fremdlicht kann das Deckelelement 33 im unteren Abschnitt 46 lichtundurchlässig ausgebildet sein.

Die Kameravorrichtung 38 weist eine Kamera 54, hier beispielhaft eine Zeilenkamera, mit einem Objektiv 55 auf, wobei grundsätzlich auch eine Flächenkamera vorgesehen sein kann. Die Kamera 54 ist über eine Datenleitung 56 mit einer elektronischen Auswerteeinheit 57 verbunden, die die von der Kameravorrichtung 38 empfangenen Bilddaten analysiert. Die Auswerteeinheit 57 ist konfiguriert, mittels Methoden der Bildverarbeitung die Anzahl, Häufigkeit und/oder Gesamtfläche von Fremdkörpern im Fasermaterial auszuwerten, um einen Fremdkörpergehalt im Fasermaterial 3 ausgeben zu können. Die Auswerteeinheit 57 kann die Fremdkörper beispielsweise aufgrund von Helligkeits- und/oder Farbabweichungen erkennen. Die Auswerteeinheit 57 ist im Innenraum 37, hier beispielhaft, im oberen Abschnitt 45 angeordnet. Auf diese Weise kann das Fasermaterial von der mit der Inspektionseinrichtung 30 ausgestatteten Maschinenseite aus optisch inspiziert werden, um Fremdkörper im Fasermaterial 3 zu erkennen.

Die hier gezeigte Ausführungsform der Aufbereitungsmaschine 1 weist nur eine einzige Inspektionseinrichtung 30 auf. Eine der Inspektionseinrichtung 30 gegenüberliegende Gehäusewand 58 ist, hier, geschlossen ausgebildet, kann jedoch in an sich bekannter Weise Revisionsöffnungen und dergleichen aufweisen, in die grundsätzlich auch eine Inspektionseinrichtung 30 eingesetzt sein könnte.

Die Inspektionseinrichtung 30 kann eine Schnittstelle aufweisen, um die Inspektionseinrichtung 30 nach Einbau in der Gehäuseöffnung 27 an ein elektrisches Versorgungssystem und/oder ein Bussystem, insbesondere ein Feldbus anschließen zu können. Die Schnittstelle kann beispielsweise Steckkontakte, Verbindungsstellen oder dergleichen umfassen, welche mit zumindest einem maschinenseitig angeordneten Gegenelement verbunden wird. Auf diese Weise können die elektronischen Komponenten der Inspektionseinrichtung 30, wie die Kameravorrichtung 38, die Beleuchtungsvorrichtung 50 und die Auswerteeinheit 57 mit Spannung versorgt und/oder mit einer Steuereinheit gekoppelt werden, um beispielsweise die Ausgabewerte der Auswerteeinheit 57 an die Steuereinheit übergeben zu können. Die Steuereinheit kann der Aufbereitungsmaschine zugeordnet sein oder eine übergeordnete Anlagensteuerung sein, die mit einer Vielzahl an Steuereinheiten weiterer Aufbereitungsmaschinen kommuniziert.

Im Betrieb der Aufbereitungsmaschine 1 wird das Fasermaterial 2 pneumatisch über den Einlass 3 in den Füllschacht 2 transportiert. Über die Entstaubungsvorrichtung 6 wird die Transportluft abgeführt und das Fasermaterial 3 sammelt sich im unteren Teil 8 des Füllschachts 2. Aufgrund des langsam arbeitenden Walzeneinzugs 9 staut es sich im Füllschacht 2 auf, wobei der Füllstand F üblicherweise oberhalb des Beobachtungsbereichs 39 und unterhalb der Lichtschranke 28 liegt. Bei hohen Produktionsraten kann es kurzfristig vorkommen, dass der Füllstand F unterhalb des Beobachtungsbereichs 39 liegt. Um zu vermeiden, dass dann Bilder aufgenommen werden, können Füllstandsensoren, wie eine weitere Lichtschranke, Lichttaster und dergleichen vorgesehen sein.

In der Figur 6 ist ein mögliches Ablaufdiagramm für einen Automatikbetrieb der Aufbereitungsmaschine 1 dargestellt. Mit Start 65 sind die Reinigungselemente 15, 16 bereits für einen vorgegebenen Ausgangswert mittels eines initialen Optimierungslaufs optimal eingestellt. Der vorgegebene Ausgangswert kann einem manuell eingegebenen Fremdkörperanteil entsprechen, der vom Betreiber aufgrund der eingekauften oder untersuchten Rohstoffqualität entspricht. Der Optimierungslauf kann im laufenden Betrieb der Aufbereitungsmaschine 1 durchgeführt werden, in dem der Walzeneinzug 9 und die Öffnungswalze 14 weiterhin drehend angetrieben werden. Während des Optimierungslaufs überprüfen die optischen Sensoren 23, 24 der Abfallsensoreinrichtung 22 das über die Absaughauben 19, 20 abgesaugte Abfallmaterial auf dessen Abfallzusammensetzung. Zu Beginn eines jeden Optimierungslaufs kann das erste Reinigungselement 15 zunächst in eine erste Position gefahren werden, in der die Reinigungsstelle bzw. Reinigungsöffnung geschlossen ist. Der Ausscheidegrad an Fremdteilen wird in der ersten Position zunächst gering sein. Dann kann das erste Reinigungselement 15 entlang des Doppelpfeils A verfahren werden und die Reinigungsöffnung allmählich freigeben, wobei der Anteil an Fremdteilen zunehmen wird. Ab einem bestimmten Punkt wird der Anteil an Gutfasern in Relation zum Anteil an Fremdteilen immer weiter zunehmen. Das erste Reinigungselement 15 wird dann in die Position gefahren, in der das Verhältnis zwischen Fremdkörpern und Gutfasern in diesem Optimierungslauf am günstigsten war. Das sich aus dem Optimierungslauf ergebende Verhältnis zwischen Fremdkörpern und Gutfasern wird als Abfallwert abgespeichert. In Abhängigkeit von in der Steuereinheit hinterlegten oder durch einen Bediener der Aufbereitungsmaschine 1 angegebenen Vorgaben können somit automatisch die Abfallzusammensetzung beeinflussende Maschinenaggregate, hier die Reinigungselemente 15, 16, so lange verstellt werden, bis die gewünschte Abfallqualität erreicht ist. Der auf Basis des Ausgangswerts durchgeführte Optimierungslauf optimiert somit die Ausreinigungseffizienz der Aufbereitungsmaschine 1.

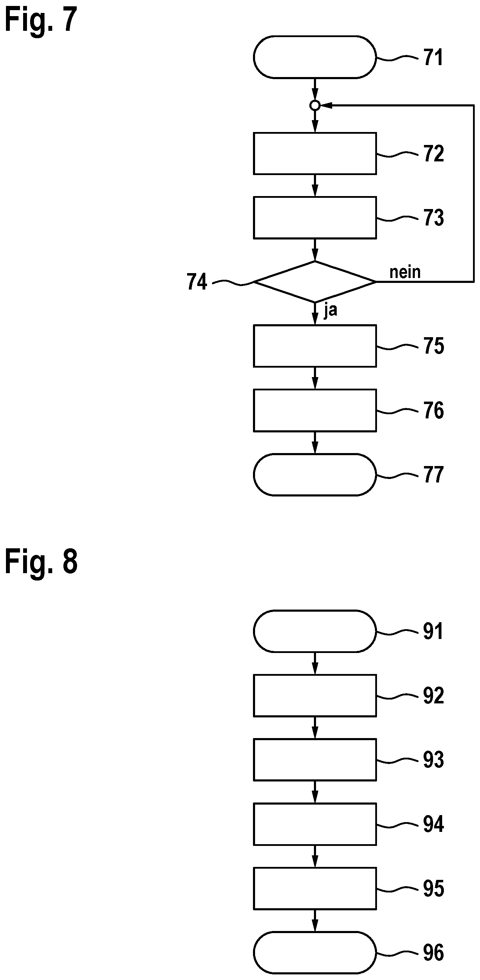

Nach Start 65 des Automatikbetriebs wird im Schritt 70 der aktuelle bzw. tatsächliche Fremdkörperanteil im Fasermaterial 3 erfasst respektive überwacht. Der Schritt 70 umfasst diverse Teilschritte, die in dem Ablaufdiagramm in der Figur 7 wiedergeben sind. Nach Start 71 der Fremdkörpererfassung nimmt die Kameravorrichtung 38 in Teilschritt 72 ein Bild von dem hinter dem Beobachtungsbereich 39 vorbeiziehenden Fasermaterial 3 auf, wobei die Beleuchtungsvorrichtung 50 den Beobachtungsbereich 39 während der Aufnahme in Auflicht-Methode beleuchtet. Anschließend wertet die Auswerteeinheit 57 die von der Kameravorrichtung 38 übertragenen Bilddaten zu dem erfassten Bild in Teilschritt 73 aus. Dabei werden die empfangenen Bilddaten mittels Methoden der Bildverarbeitung in Bezug auf Anzahl, Häufigkeit und/oder Gesamtfläche von Fremdkörpern im Fasermaterial 3 ausgewertet. In der Regel stellen sich Fremdteile, wie Stängel, Blätter oder allgemein "Trash"-Teilchen als dunkle Stellen von dem ansonsten creme- bis weißfarbigen Fasermaterial 3 dar. Dadurch, dass fast schon binäre Zustände vorliegen, ist die Segmentierung zwischen gesuchten Fremdkörpern vor dem hellen Hintergrund des Fasermaterials 3 beispielsweise durch Schwellenwertoperationen möglich. Eine klassische Zerlegung der Szene in Objekte mit Merkmalen wie Größe, Fläche, Kontur etc. kann folgen. Der Fremdkörpergehalt kann durch Zählen der dunklen Objekte oder durch auf Akkumulieren der Fläche bestimmt werden. Weiter können Größenhistogramme oder auch eine Klassifizierung der Objekte in Gruppen wie Trash, Stängel, Blätter etc. erfolgen.

In Teilschritt 74 wird abgefragt, ob die von der Kameravorrichtung 38 erfasste Bildfläche einer definierten Mindestfläche entspricht. Um aus den Bilddaten einen Ausgabewert bzw. Messwert zu generieren, der den Fremdkörpergehalt im Fasermaterial zuverlässig bzw. statistisch gesichert wiedergibt, hat sich als vorteilhaft gezeigt, wenn die Mindestfläche, die durch die Kameravorrichtung 38 erfasst wird, einen definierten Mindestwert einnimmt. Eine sehr hohe Genauigkeit wurde erzielt, wenn die Mindestfläche mehr als 2 Quadratmeter und weiter bevorzugt zumindest in etwa 3 Quadratmeter beträgt. Aufgrund der im Vergleich mit der Mindestfläche geringen Erfassungsfläche der Zeilenkamera 54 von, lediglich beispielhaft 90 Quadratmillimeter, werden so lange weitere Bilder aufgenommen 72 und ausgewertet 73, bis die definierte Mindestfläche erreicht wurde.

Um möglichst schnell auf den sich verändernden Fremdkörperanteil im Fasermaterial 3 durch Anpassung der Reinigungselemente 15, 16 reagieren zu können, ist ein Ziel, die definierte Mindestfläche von dem Fasermaterial 3 in einer möglichst kurzen Zeitspanne zu erfassen, ohne dabei Fremdkörper mehrfach zu erfassen. Da die hier gezeigte Aufbereitungsmaschine 1 nur eine einzige Inspektionseinrichtung 30 aufweist, muss die geforderte Mindestfläche somit durch die Bilder der einen Kameravorrichtung 38 erfasst werden. Die Erfassungsfläche der Kameravorrichtung 38 kann beispielsweise durch Vergrößern deren Abstands zur Ablenkungsvorrichtung 41 bzw. zum Beobachtungsbereich 39 vergrößert werden, wodurch mit einem Bild eine größere Fläche erfasst werden kann. Die Bildaufnahmefrequenz ist abhängig von der Transportgeschwindigkeit und kann nur in begrenztem Umfang erhöht werden, um eine Mehrfachzählung derselben Fremdkörper zu vermeiden. Die Bilder können bei einer beispielhaft angenommenen Transportgeschwindigkeit von 120 bis 360 Millimeter pro Minute mit einer Bildaufnahmefrequenz von 13 bis 80 Hertz aufgenommen werden. Bei einer lediglich beispielhaft angenommenen Erfassungs- bzw. Bildfläche eines Bildes der Kameravorrichtung 38 von 90 Quadratmillimeter würde die Meßzeit bis zum Erreichen der Mindestfläche von hier beispielhaft 3 Quadratmeter somit 14 Minuten betragen. Höhere Transportgeschwindigkeiten, die durch höhere Produktionsraten erzielbar sind, ermöglichen somit eine höhere Bildaufnahmefrequenz, wodurch die Mindestfläche schneller erfassbar wird. Die Auswerteeinheit 57 berücksichtigt bei der Bildauswertung somit, wie für Zeilenkameras üblich, zeilenweise aufgebaute Bilder und wertet diese mit Bildverarbeitungsalgorithmen hinsichtlich der Fremdkörper aus. Die Auswerteergebnisse der einzelnen Bilder werden akkumuliert, um die Bestimmungsgenauigkeit des Fremdkörperanteils im Fasermaterial 3 zu verbessern.

In Teilschritt 75 berücksichtigt die Auswerteeinheit 57 bei der Bildauswertung den vom Drucksensor 29 gemessenen Staudruck im Füllschacht 2. Die in den Füllschacht 2 einströmende Transportluft führt stets zu einer gewissen Verdichtung des Fasermaterials 3 im Füllschacht 2, wodurch die Genauigkeit des Ausgabewerts beeinflusst sein kann. Um diesen Einfluss zu minimieren und bestenfalls zu eliminieren, ist der Drucksensor 29 mit der Auswerteeinheit 57 gekoppelt. Mit Hilfe des gemessenen Staudruckes und einer in der Auswerteeinheit 57 hinterlegten Kalibrierkurve kann der Ausgabewert der Auswerteeinheit 57 auf eine vom Staudruck unabhängige Kenngröße korrigiert werden. Die Auswerteeinheit 57 gibt deren korrigierten Ausgabewert an eine Steuereinheit der Aufbereitungsmaschine 1 aus. Der korrigierte Ausgabewert wird an die Steuereinheit übermittelt, siehe Teilschritt 76. Mit 77 endet die Erfassung des Fremdkörpergehalts. Der Vorgang zur Fremdkörpererfassung gemäß den Teilschritten 71 bis 77 kann regelmäßig wiederholt werden. Es können auch mit zeitlichem Versatz mehrere der Erfassungsvorgänge zeitgleich ablaufen, wodurch in kürzeren Zeitabständen mittels des aktualisierten Ausgabewerts ein aktueller Fremdkörpergehalt bereitgestellt werden kann.

Gemäß dem in der Figur 6 gezeigten Ablaufdiagramm folgt nach Schritt 70 ein Schritt 80, in dem die Abfallzusammensetzung mittels der Abfallsensoreinrichtung 22 bestimmt wird. Die Abfallsensoreinrichtung 22 kann regelmäßig und grundsätzlich auch permanent die Abfallzusammensetzung überwachen, sodass der Schritt 80 auch zeitgleich mit dem Schritt 70 ablaufen kann. Die Abfallsensoreinrichtung 22 bestimmt mittels der optischen Sensoren 23, 24 die Abfallzusammensetzung bzw. den Anteil an Gutfasern des über die Absaughauben 19, 20 abgesaugten Abfallmaterials.

Auf Basis der insbesondere korrigierten Ausgabewerte und der Abfallzusammensetzung kann in Schritt 85 entschieden werden, ob eine Optimierung der Ausreinigung der Aufbereitungsmaschine 1 erforderlich ist ("ja"). Wenn keines der nachstehend genannten Kriterien erfüllt ist, sind die Reinigungselemente 15, 16 aktuell optimal eingestellt und zum jetzigen Zeitpunkt ist keine Optimierung notwendig ("nein"), sodass das Verfahren mit der die Schritte 70, 80 und 85 umfassenden Schleife fortgeführt wird.

Die Optimierung wird in Schritt 90 durchgeführt, wenn eines der folgenden Kriterien erfüllt ist:
- wenn der insbesondere korrigierte Ausgabewert im Vergleich mit dem beim vorherigen bzw. initialen Optimierungslauf gesetzten bzw. vorgegebenen Ausgangswert gleichgeblieben ist oder zumindest innerhalb eines vorgebbaren Toleranzbereichs um den Ausgangswert liegt, jedoch die Abfallzusammensetzung bzw. Abfallmenge von dem beim vorherigen Optimierungslauf gesetzten Abfallwert abweicht und insbesondere außerhalb eines vorgebbaren Toleranzbereichs um den Abfallwert liegt;
- wenn die Abfallzusammensetzung bzw. Abfallmenge im Vergleich mit dem beim vorherigen bzw. initialen Optimierungslauf gesetzten Abfallwert gleichgeblieben ist oder zumindest innerhalb eines vorgebbaren Toleranzbereichs um den Abfallwert liegt, jedoch der insbesondere korrigierte Ausgabewert sich über die Zeit betrachtet verändert hat, *weil der Ausgabewert außerhalb des vorgebbaren Toleranzbereichs liegt, ein sprunghafter Anstieg des Ausgabewerts erfasst wurde oder bei Betrachtung des Integrals über die Zeit eine kontinuierliche Erhöhung oder Verringerung erkannt wird*;
- wenn sowohl der insbesondere korrigierte Ausgabewert im Vergleich mit dem Ausgangswert außerhalb des vorgebbaren Toleranzbereichs um den Ausgangswert liegt als auch die Abfallzusammensetzung bzw. Abfallmenge außerhalb des vorgebbaren Toleranzbereichs um den Abfallwert liegt.

Die Optimierung 90 umfasst diverse Teilschritte, die in dem Ablaufdiagramm in der Figur 8 wiedergeben sind. Nach Start 91 wird der Optimierungslauf 92 durchgeführt, bei dem die Stellung der Reinigungselemente 15, 16 in Schritt 92 verändert und währenddessen die sich ändernde Abfallzusammensetzung mittels der Abfallsensoreinrichtung 22 überwacht wird. Dabei wird in Abhängigkeit von in der Steuereinheit hinterlegten oder durch den Bediener der Aufbereitungsmaschine 1 angegebenen Vorgaben die Abfallzusammensetzung beeinflussenden Maschinenaggregate, hier die Reinigungselemente 15, 16, automatisch so lange verstellt, bis die gewünschte Abfallqualität für den erfassten Ausgabewert, der den aktuellen Fremdkörpergehalt wiedergibt, erreicht ist. Statt des vollständigen Optimierungslaufs 92, bei dem zunächst die erste Position angefahren wird, kann auch ausgehend vom bisher eingestellten Betriebspunkt durch geringfügiges Verstellen der Reinigungselemente 15, 16 geprüft werden, ob durch kleine Anpassungen eine Verbesserung der Ausscheideeffizienz erreicht wird. In Teilschritt 93 wird der aktuelle Ausgabewert erfasst, der den aktuellen Fremdkörpergehalt im Fasermaterial 3 repräsentiert. In Teilschritt 94 wird die aktuelle Abfallzusammensetzung erfasst, die das Verhältnis zwischen Fremdkörpern und Gutfasern repräsentiert. In Teilschritt 95 werden der aktuelle Ausgabewert als Ausgangswert und die aktuelle Abfallzusammensetzung als Abfallwert gesetzt und dienen damit als Referenzwerte für nachfolgende Entscheidungen gemäß Schritt 85. Mit 96 endet die Optimierung 90. Vorzugsweise erfolgt die Optimierung 90 vollautomatisch und wird durch die Steuereinheit gestartet und überwacht. Grundsätzlich kann vor jedem Optimierungslauf eine Bestätigung des Maschinenbedieners notwendig sein. Der jeweilige Optimierungslauf kann optisch angezeigt und/oder digital protokolliert werden.

Um stets einen möglichst aktuellen Ausgabewert bereitzustellen zu können, kann der Vorgang zur Fremdkörpererfassung 70 mit den Teilschritten 71 bis 77 als Hintergrundprozess regelmäßig wiederholt werden. Ebenso kann die Abfallzusammensetzung 80 insbesondere permanent erfasst werden.

Die Inspektionseinrichtung 30 kann vorzugsweise auch als Sichtöffnung genutzt werden, über die ein Bediener der Aufbereitungsmaschine 1 in den Füllschacht 2 hineinschauen kann. Hierzu kann die Öffnungsverschlussvorrichtung 31 einen Sichtabschnitt 59 aufweisen, in dem sowohl das Deckelelement 33 als auch das Trennelement 32 durchsichtig gestaltet sind und keine im Innenraum 37 verbauten Komponenten den Blick von außen auf das Fasermaterial 3 beeinträchtigen. Vorzugsweise ist der Sichtabschnitt 59 ein mittlerer Abschnitt der Öffnungsverschlussvorrichtung 31, der zwischen dem oberen Abschnitt 45 und dem unteren Abschnitt 46 angeordnet ist. Wenn der Bediener eine Veränderung des Fremdkörperanteils durch Blick von außen durch den Sichtabschnitt 59 in den Füllraum 2 selbst erkennt, kann die Optimierung 90 auch manuell angestoßen werden, beispielsweise über eine Applikation auf einem mobilen Endgerät, ein Bedienterminal der Aufbereitungsmaschine 1 und/oder über eine übergeordnete Steuereinheit.

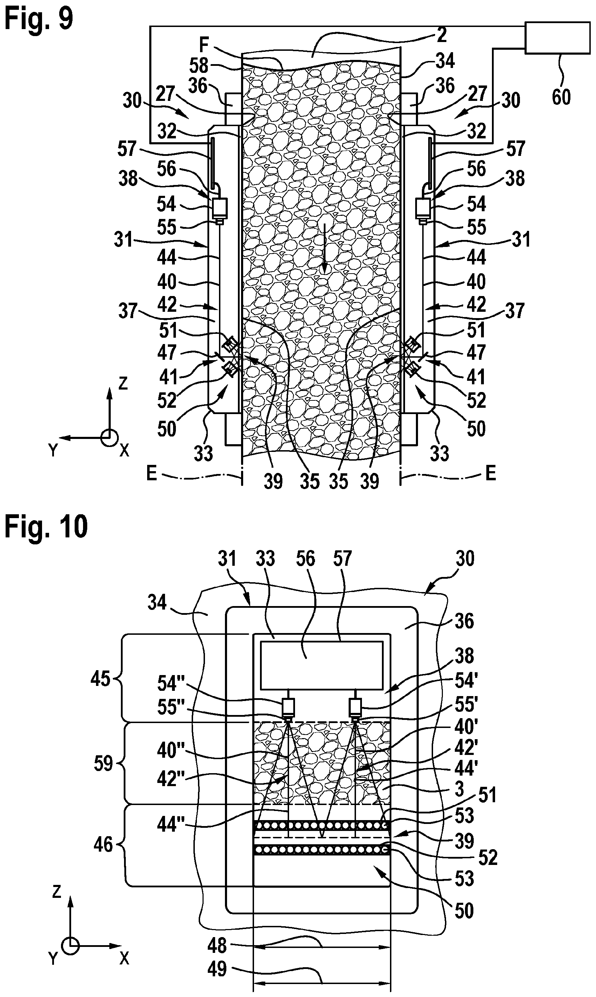

In der Figur 9 ist eine alternative Ausführungsform der Aufbereitungsmaschine 1 dargestellt, die den vorbeschriebenen Ausführungsformen weitestgehend entspricht, sodass hinsichtlich der Gemeinsamkeiten auf die obige Beschreibung Bezug genommen wird. Der Unterschied besteht darin, dass die Aufbereitungsmaschine 1 mehrere, hier beispielhaft, zwei der Inspektionseinrichtungen 30 aufweist. Die beiden Inspektionseinrichtungen 30 sind in den Gehäuseöffnungen 27 in den beiden einander gegenüberliegend angeordneten Gehäusewänden 34, 58 eingesetzt. Durch Aufnehmen von Bildern einer Fasermaterialoberfläche des Fasermaterials 3 durch die mehreren Beobachtungsbereichen 39 kann eine Änderung der Rohstoffqualität präziser und schneller erfasst werden, da mehrere, hier zwei, der Kameravorrichtungen 38 zum Erreichen der Mindestfläche (Teilschritt 74) zeitgleich beitragen. Der Ablauf entspricht somit weitestgehend dem in den Figuren 6 bis 8 gezeigten Ablauf. Jeder Kameravorrichtung 38 ist eine der Auswerteeinheiten 57 zugeordnet, welche die Bilddaten der zugeordneten Kameravorrichtung 38 analysiert. Die Auswerteeinheiten 57 übertragen deren Ergebnisse über eine angedeutete Datenleitung an eine weitere bzw. übergeordnete Auswerteeinheit 60, in der die Einzelergebnisse zusammengefasst werden. Auf diese Weise wird die erforderliche Meßzeit verkürzt, hier bei Einsatz von zwei Kameravorrichtungen 38 halbiert.

In der Figur 10 ist eine weitere Ausführungsform der Inspektionseinrichtung 30 dargestellt, die den vorbeschriebenen Inspektionseinrichtungen 30 weitestgehend entspricht, sodass hinsichtlich der Gemeinsamkeiten auf die obige Beschreibung Bezug genommen wird. Der Unterschied besteht lediglich darin, dass die Kameravorrichtung 38 der jeweiligen Inspektionseinrichtung 30 statt einer Kamera 54 hier zwei der Kameras 54', 54", exemplarisch Zeilenkameras, mit je einem Objektiv 55', 55" aufweist. Deren Strahlengang 44', 44" ist zur jeweiligen optischen Achse 40', 40" parallel ausgerichtet. Statt der Zeilenkameras können auch Matrix- bzw. Flächenkameras verwendet werden. Auf diese Weise kann die Erfassungsbreite 48 der Kameravorrichtung 38 vergrößert, wodurch die Meßzeit bis zum Erreichen der Mindestfläche verkürzt werden kann. Weiterhin kann aufgrund der größeren Erfassungsbreite 48 auch der Abstand der Kameras 54', 54" zur Ablenkungsvorrichtung 41 verringert werden. Diese Aspekte können bei breiteren Beobachtungsbereichen 39 und/oder bei niedrigeren Gehäuseöffnungen 27, die in der Erstreckung entlang der Hochachse Z nur eine geringe Bauhöhe bieten, besonders von Vorteil sein. Zudem bleibt die Sichtlinie der Objektive 55', 55" zu den Rändern des einzelnen Kamerabildes genügend steil, sodass optische Fehler wie Verzerrung, Randlichtabfall, Schärfeabfall und dergleichen vernachlässigbar bleiben. Die Beleuchtungsvorrichtung 50 deckt die gesamte Erfassungsbreite 48 ab, die, hier beispielhaft, der lichten Breite 49 des Rahmens 36 entspricht.

In der Figur 11 ist eine weitere Ausführungsform der Ausbereitungsmaschine 1 dargestellt, die den vorbeschriebenen Ausführungsformen weitestgehend entspricht, sodass hinsichtlich der Gemeinsamkeiten auf die obige Beschreibung Bezug genommen wird. Der Unterschied besteht in der Ausgestaltung der Ablenkungsvorrichtung 41 und der Beleuchtungsvorrichtung 50. Der erste Strahlengangabschnitt 43 ist, hier beispielsweise mit einem Winkel von 45 Grad zur Beobachtungsebene E, schräg nach oben gerichtet. Über die Ablenkungsvorrichtung 41 wird der Strahlengang 42 umgelenkt, sodass der zweite Strahlengangabschnitt 44 parallel zur optischen Achse 40 der Kameravorrichtung 38 verläuft. Die Beleuchtungsvorrichtung 50 weist nur das untere Beleuchtungselement 52 auf, dass senkrecht zur Beobachtungsebene E auf den Beobachtungsbereich 39 gerichtet ist, um störende Lichtreflexe auf dem transparenten Trennelement 32, die sich im Bild der Kameravorrichtung 38, respektive in den Bilddaten wiederfinden würden, auszuschließen. Der Einfall- bzw. Ausfallwinkel am Spiegel der Ablenkungsvorrichtung 41 ist somit jeweils größer als 45 Grad und kann, wie hier beispielhaft gezeigt, 67,5 Grad betragen. Dadurch kann die Ablenkungsvorrichtung 41 sowie die Kameravorrichtung 38 näher an das Trennelement 32 angeordnet sein, sodass die Öffnungsverschlussvorrichtung 31 flacher bauend ausgestaltet sein kann.

Am Beispiel der in der Figur 10 gezeigten Ausführungsform ist verdeutlicht, dass die Kameravorrichtung 38 grundsätzlich auch im Innenraum 37 weit oben angeordnet sein kann. Die Kameravorrichtung 38 ist, hier, zwischen dem Trennelement 32 und der Auswerteeinheit 57 angeordnet. Durch diese Verschachtelung ist der Abstand der Kameravorrichtung 38 zur Ablenkungsvorrichtung 41 vergrößert, wodurch die Erfassungsbreite 48 vergrößert wird. Es versteht sich, dass alle in den Ausführungsformen gezeigten Einzelmerkmale untereinander übertragbar sind und umgekehrt. Lediglich exemplarisch hierfür wird hervorgehoben, dass die Kameravorrichtung 38 auch bei den in den Figuren 1 bis 8 gezeigten Ausführungsformen mit der Auswerteeinheit 57 in der verschachtelten Anordnung positioniert sein kann, um die Kameravorrichtung 38 so weit wie möglich nach oben zu verlagern; oder dass die Öffnungsverschlussvorrichtung 31 als starres Fenster oder als schwenkbares Fenster gestaltet sein; etc.

In der Figur 12 ist eine Aufbereitungsmaschine 100 gemäß einer weiteren Ausführungsform gezeigt, die als Mischer ausgebildet ist und mehrere der Inspektionseinrichtungen 30 aufweist. Die Inspektionseinrichtungen 30 können, wie in den Figuren 1 bis 5 und 9 bis 11 gezeigt, gestaltet sein, sodass hinsichtlich der Gemeinsamkeiten auf die obige Beschreibung Bezug genommen wird. Dabei sind gleiche bzw. abgewandelte Einzelheiten mit den gleichen Bezugszeichen versehen. In der Figur 12 ist zur Verdeutlichung der Ausrichtung der Aufbereitungsmaschine 100 im Raum eine Längsrichtung X, eine Querrichtung Y und eine Hochrichtung Z eingezeichnet, die im Sinne eines der Aufbereitungsmaschine 100 zugeordneten kartesischen Koordinatensystems definiert und durch entsprechende Pfeile angegeben sind. Begriffe wie "unten", "unterhalb", "oben" oder "oberhalb" stellen dabei räumliche Angaben in Bezug auf Hochrichtung Z dar. Die Aufbereitungsmaschine 100 kann auf einem ortsfesten Boden aufgestellt sein, der in einer von der Längsrichtung X und der Querrichtung Y aufgespannten horizontalen Ebene liegt.

Die Aufbereitungsmaschine 100 weist in einer Reihe hintereinander mehrere, hier beispielhaft, zehn Füllschächte 2 auf. Die Füllschächte 2 sind an einen oberhalb der Füllschächte 2 verlaufenden Kanal 101 angeschlossen, der eingangsseitig über den Einlass 4 an eine vorgeschaltete Spinnereivorbereitungsmaschine (nicht gezeigt) angeschlossen ist. Das üblicherweise in Flockenform bereitgestellte Fasermaterial 3 wird über den Einlass 4 und den Kanal 101 in die Füllschächte 2 pneumatisch eingebracht. Zwischen dem Kanal 101 und den einzelnen Füllschächten 2 können in an sich bekannter Weise Steuerorgane (nicht gezeigt) vorgesehen sein, um die Befüllung der einzelnen Füllschächte 2 steuern zu können. In an sich bekannter Weise kann im unteren Teil 8 des jeweiligen Füllschachts 2 ein Walzeneinzug und eine Öffnungswalze angeordnet sein, wie in den Figuren 1 und 2 mit den Bezugszeichen 9 und 14 gezeigt. Weiterhin kann unterhalb der Füllschächte 2 ein gemeinsamer Mischkanal angeordnet sein, aus dem das darin abgelagerte Fasermaterial in der Transportrichtung T über ein Rohrleitungssystem an eine nachfolgende Aufbereitungsmaschine, beispielsweise der in den Figuren 1 und 2 gezeigte Reiniger 1, abtransportiert wird.

In einer vorderseitigen Gehäusewand 34 der Aufbereitungsmaschine 100 sind je Füllschacht 2 Inspektionseinrichtungen 30 in den Gehäuseöffnungen eingesetzt. Möglich ist aber auch, dass die Aufbereitungsmaschine 100 insgesamt nur eine der Inspektionseinrichtungen 30 aufweist oder nur eine Teilmenge der Füllschächte 2 mit einer der Inspektionseinrichtungen 30 überwacht wird. Die im Betrieb erfassten Bilder werden mittels der Auswerteeinheiten 57 und gegebenenfalls zumindest einer übergeordneten Auswerteeinheit 60 ausgewertet. Die Ausgabewerte können zusammengefasst und Mittelwerte gebildet werden, um ein repräsentativeres Ergebnis zu erhalten. Das parallele Inspizieren mit den mehreren Inspektionseinrichtungen 30 kann in kürzerer Meßzeit statistisch genauere Daten über die Rohstoffqualität, insbesondere den Fremdkörpergehalt liefern. Darüber hinaus können auch an einer Rückwand der Aufbereitungsmaschine 100 weitere Inspektionseinrichtungen 30 angeordnet sein, wie an der in der Figur 12 gezeigten Vorderseite. Je mehr Inspektionseinrichtungen 30 vorgesehen sind, desto kürzere Messzeiten sind erreichbar. Beispielweise können je Füllschacht 2 zwei der Inspektionseinrichtungen 30, eine davon an der Vorderseite und eine davon an der Rückseite, vorgesehen sein, sodass der, hier beispielhaft, mit zehn Füllschächten 2 gezeigte Mischer 100 zum Beispiel zwanzig der Inspektionseinrichtungen 30 aufweisen kann.

Durch Zusammenfassung der, hier zwanzig, Einzelergebnisse kann die Auswertezeit deutlich reduziert werden. Eine zentrale Steuereinheit oder eines der Auswerteeinheiten, insbesondere die übergeordnete Auswerteeinheit 60, kann das Zusammenfassen der Ausgabewerte und die Übertragung an eine Steuereinheit übernehmen. Die Steuereinheit kann der nachgeschalteten Spinnereivorbereitungsmaschine, insbesondere dem Reiniger 1 zugeordnet sein, der basierend auf den im Mischer 100 erfassten Fremdkörpergehalt, eine automatische Veränderung von Einstellungen an die Abfallausscheidung beeinflussende Maschinenelemente, beispielsweise die Veränderung der Position der Reinigungselemente 15, 16 vornehmen kann.

## Patentansprüche

1. Aufbereitungsmaschine (1; 100) mit einem Gehäuse (26), das zumindest einen Füllschacht (2) für Fasermaterial (3) umschließt und zumindest eine Gehäuseöffnung (27), über die der Füllschacht (2) von außen einsehbar ist, aufweist, und mit zumindest einer Inspektionseinrichtung (30) zum Erkennen von Fremdkörpern in Fasermaterial, das in dem Füllschacht (2) aufgenommen ist, wobei die Inspektionseinrichtung (30) in mindestens einer der zumindest einen Gehäuseöffnung (27) eingesetzt ist und
- eine Öffnungsverschlussvorrichtung (31) zum Verschließen der Gehäuseöffnung (27), die ein Trennelement (32) mit einem durchsichtigen Beobachtungsbereich (39), der eine Beobachtungsebene (E) definiert, und ein am Trennelement (32) angeordnetes Deckelelement (33) aufweist, wobei zwischen dem Trennelement (32) und dem Deckelement (33) ein Innenraum (37) gebildet ist; und
- eine Kameravorrichtung (38), die in dem Innenraum (37) angeordnet ist; umfasst,
wobei
- eine optische Achse (40) der Kameravorrichtung (38) zumindest im Wesentlichen parallel zur Beobachtungsebene (E) ausgerichtet ist, und
- dass im Innenraum (37) der Öffnungsverschlussvorrichtung (31) eine Ablenkungsvorrichtung (41), die einen vom Beobachtungsbereich (39) ausgehenden Strahlengang (42) hin zur Kameravorrichtung (38) umlenkt, angeordnet ist.

2. Aufbereitungsmaschine (1; 100) nach Anspruch 1, **dadurch gekennzeichnet, dass** die Ablenkungsvorrichtung (41) eine reflektierende Oberfläche (47) aufweist, wobei ein Einfallswinkel zwischen dem Strahlengang (42) und einer Flächennormalen der reflektierenden Oberfläche (47) 45 Grad beträgt, oder wobei ein Einfallswinkel zwischen dem Strahlengang (42) und einer Flächennormalen der reflektierenden Oberfläche (47) größer als 45 Grad und kleiner als 85 Grad beträgt.

3. Aufbereitungsmaschine (1; 100) nach Anspruch 1 oder 2, **dadurch gekennzeichnet, dass** die Kameravorrichtung (38) zumindest eine Zeilenkamera (54; 54', 54") umfasst.

4. Aufbereitungsmaschine (1; 100) nach einem der Ansprüche 1 bis 3, **dadurch gekennzeichnet, dass** im Innenraum (37) eine Beleuchtungsvorrichtung (50) zum Beleuchten des am Beobachtungsbereich (39) vorbeigeführten Fasermaterials (3) angeordnet ist, wobei sich die Beleuchtungsvorrichtung (50) über die gesamte Breite des Beobachtungsbereichs (39) erstreckt.

5. Aufbereitungsmaschine (1; 100) nach einem der Ansprüche 1 bis 4, **dadurch gekennzeichnet, dass** die Öffnungsverschlussvorrichtung (31) einen oberen Abschnitt (45) und einen vom oberen Abschnitt (35) axial zur optischen Achse (40) beabstandeten unteren Abschnitt (45) aufweist, wobei die Kameravorrichtung (38) im oberen Abschnitt (45) und der Beobachtungsbereich (39) sowie die Ablenkungsvorrichtung (41) im unteren Abschnitt (46) angeordnet sind.

6. Aufbereitungsmaschine (1; 100) nach einem der Ansprüche 1 bis 5, **dadurch gekennzeichnet, dass** das Deckelelement (33) im unteren Abschnitt (46) lichtundurchlässig ausgebildet ist.

7. Aufbereitungsmaschine (1; 100) nach einem der Ansprüche 1 bis 6, **dadurch gekennzeichnet, dass** die Öffnungsverschlussvorrichtung (31) einen Sichtabschnitt (5), in dem das Trennelement (32) und das Deckelement (33) durchsichtig ausgebildet sind, aufweist, insbesondere wobei der Sichtabschnitt (59) zwischen dem oberen Abschnitt (45) und dem unteren Abschnitt (46) angeordnet ist.

8. Aufbereitungsmaschine (1; 100) nach einem der Ansprüche 1 bis 7, **dadurch gekennzeichnet, dass** der Öffnungsverschlussvorrichtung (31) Gelenkmittel (61) zum schwenkbaren Befestigen an der Aufbereitungsmaschine (1; 100) im Bereich der Gehäuseöffnung (27) aufweist.

9. Aufbereitungsmaschine (1; 100) nach einem der Ansprüche 1 bis 8, **dadurch gekennzeichnet, dass** in dem zumindest einen Füllschacht (2) ein Drucksensor (29) zum Messen eines Staudrucks angeordnet ist, wobei der Drucksensor (29) oberhalb eines vorgegebenen maximalen Füllstands (Fₘₐₓ) für den zumindest einen Füllschacht (2) angeordnet ist, und dass die zumindest eine Inspektionseinrichtung (30) unterhalb des maximalen Füllstands (Fₘₐₓ) angeordnet ist.

10. Aufbereitungsmaschine (1; 100) nach Anspruch 9, **dadurch gekennzeichnet, dass** in dem zumindest einen Füllschacht (2) eine Lichtschranke (28) oder ein Lichttaster angeordnet, wobei eine Einbauhöhe der Lichtschranke (28) bzw. des Lichttasters den maximalen Füllstand (Fₘₐₓ) vorgibt.

11. Anlage umfassend mehrere der Aufbereitungsmaschinen (1; 100) nach einem der Ansprüche 1 bis 10.

12. Verfahren zum Erkennen von Fremdkörpern in Fasermaterial (3), das in einem Füllschacht (2) einer Aufbereitungsmaschine (1; 100) nach einem der Ansprüche 1 bis 10 oder in Füllschächten (2) einer Anlage nach Anspruch 11 aufgenommen ist, wobei das Verfahren folgende Schritte umfasst:
- Aufnehmen (72) von Bildern des am Beobachtungsbereich (39) vorbeiziehenden Fasermaterials (3) mittels der Kameravorrichtung (38) der jeweiligen Inspektionseinrichtung (30);
- Auswerten (73) der aufgenommenen Bilder durch zumindest eine Auswerteeinheit (57) zur Bestimmung eines Fremdkörpergehalts im Fasermaterial (3);
- Ausgeben (76) zumindest eines Ausgabewerts, welches den Fremdkörpergehalt im Fasermaterial (3) umfasst.

13. Verfahren nach Anspruch 12, **dadurch gekennzeichnet, dass** zumindest eine der Aufbereitungsmaschinen (1; 100) oder die Anlage zumindest eine Abfallsensoreinrichtung (22) aufweist, die konfiguriert ist, eine Abfallzusammensetzung eines aus dem Fasermaterial (3) ausgeschiedenen, Fremdkörper und Gutfasern umfassenden Abfallmaterials mittels zumindest eines optischen Sensors (23, 24) zu bestimmen, und dass das Verfahren zumindest einen der folgenden Schritte umfasst:
- Vergleichen (85) des zumindest einen Ausgabewerts mit zumindest einem vorgegebenen und/oder vorherigen Ausgangswert;
- Durchführen eines Optimierungslaufs (92) an der jeweiligen Aufbereitungsmaschine (1; 100) und/oder einer der jeweiligen Aufbereitungsmaschine (1; 100) nachgeschalteten Spinnereivorbereitungsmaschine (1; 100) und/oder einer der jeweiligen Aufbereitungsmaschine (1; 100) vorgeschalteten Spinnereivorbereitungsmaschine (1; 100), bei dem eine Stellung oder Drehgeschwindigkeit zumindest eines Reinigungselements (15, 16) zum Abscheiden von Abfallmaterial aus dem Fasermaterial (3) automatisch verändert wird, wenn der zumindest eine Ausgabewert von dem zumindest einen Ausgangswert abweicht, wobei mittels einer Abfallsensoreinrichtung (22) eine aktuelle Abfallzusammensetzung des ausgeschiedenen, Fremdkörper und Gutfasern umfassenden Abfallmaterials in einem dem zumindest einen Reinigungselement (15, 16) nachgeschalteten Abfallstrang (21) mittels zumindest eines optischen Sensors (23, 24) bestimmt wird (80).

## Claims

1. A processing machine (1; 100) comprising a housing (26) which encloses at least one feed chute (2) for fibrous material (3) and has at least one housing opening (27) through which the feed chute (2) is visible from the outside, and comprising at least one inspection device (30) for detecting foreign matter in fibre material contained within the feed chute (2), wherein the inspection device (30) is mounted in at least one of the at least one housing opening (27) and
- an opening closure device (31) for covering the housing opening (27), which comprises a partition element (32) with a transparent observation area (39) defining an observation plane (E), and a cover element (33) arranged on the partition element (32), wherein an internal space (37) is formed between the partition element (32) and the cover element (33); and
- a camera device (38) arranged within the internal space (37);
wherein
- an optical axis (40) of the camera device (38) is aligned at least substantially parallel to the observation plane (E), and
- a deflection device (41), which deflects a beam path (42) originating from the observation area (39) towards the camera device (38), is arranged within the interior space (37) of the opening closure device (31).

2. Processing machine (1; 100) according to claim 1,
**characterised in that** the deflection device (41) comprises a reflective surface (47), wherein the angle of incidence between the beam path (42) and a surface normal to the reflective surface (47) is 45 degrees, or wherein the angle of incidence between the beam path (42) and a surface normal to the reflective surface (47) is greater than 45 degrees and less than 85 degrees.

3. A processing machine (1; 100) according to claim 1 or 2,
**characterised in that** the camera device (38) comprises at least one line scan camera (54; 54', 54'').

4. A processing machine (1; 100) according to any one of claims 1 to 3,
**characterised in that** an illumination device (50) is arranged within the interior (37) for illuminating the fibre material (3) as it passes the observation area (39), wherein the illumination device (50) has its extension across the entire width of the observation area (39).

5. A processing machine (1; 100) according to any one of claims 1 to 4,
**characterised in that** the opening closure device (31) comprises an upper section (45) and a lower section (45) spaced from the upper section (35) axially relative to the optical axis (40), wherein the camera device (38) is arranged in the upper section (45) and the observation area (39) and the deflection device (41) are arranged in the lower section (46).

6. A processing machine (1; 100) according to any one of claims 1 to 5,
**characterised in that** the cover element (33) is designed to be opaque in the lower section (46).

7. A processing machine (1; 100) according to any one of claims 1 to 6,
**characterised in that** the opening closure device (31) comprises a viewing section (5), in which the partition element (32) and the cover element (33) are transparent, in particular wherein the viewing section (59) is arranged between the upper section (45) and the lower section (46).

8. A processing machine (1; 100) according to any one of claims 1 to 7,
**characterised in that** the opening closure device (31) comprises hinge means (61) for pivotally mounting it to the processing machine (1; 100) in the region of the housing opening (27).

9. A processing machine (1; 100) according to any one of claims 1 to 8,
**characterised in that**, in the at least one feed chute (2) a pressure sensor (29) for measuring dynamic pressure is arranged, wherein the pressure sensor (29) is arranged above a predetermined maximum fill level (Fₘₐₓ) for the at least one feed chute (2), and **in that** the at least one inspection device (30) is arranged below the maximum fill level (Fₘₐₓ).

10. A processing machine (1; 100) according to claim 9,
**characterised in that** a light barrier (28) or a light sensor is arranged in the at least one feed chute (2), wherein the installation height of the light barrier (28) or the light sensor defines the maximum fill level (Fₘₐₓ).

11. A system comprising a plurality of the processing machines (1; 100) according to any one of claims 1 to 10.

12. A process for detecting foreign material in fibrous material (3) which is contained in a feed hopper (2) of a processing machine (1; 100) according to any one of claims 1 to 10 or in feed chutes (2) of a system according to claim 11, the process comprising the following steps:
- Capturing (72) images of the fibrous material (3) passing the observation area (39) by means of the camera device (38) of the respective inspection device (30);
- Analysing (73) the captured images by at least one evaluation unit (57) to determine a foreign material content in the fibrous material (3);
- Outputting (76) at least one output value representing the foreign matter content in the fibrous material (3).

13. A process according to claim 12,
**characterised in that** at least one of the processing machines (1; 100) or the system comprises at least one waste sensor device (22) which is configured to determine a waste composition of a waste material separated from the fibrous material (3) and comprising foreign matter and good fibres by means of at least one optical sensor (23, 24), and **in that** the process comprises at least one of the following steps:
- Comparing (85) the at least one output value with at least one predetermined and/or previous reference value;
- Carrying out an optimisation run (92) on the respective processing machine (1; 100) and/or a spinning preparation machine (1; 100) downstream of the respective processing machine (1; 100) and/or a spinning preparation machine (1; 100) upstream of the respective processing machine (1; 100), in which the position or rotational speed of at least one cleaning element (15, 16) for separating waste material from the fibrous material (3) is automatically adjusted if the at least one output value deviates from the at least one reference value, wherein a waste sensor device (22) is used to determine the current composition of the separated waste material, comprising foreign matter and good fibres, by means of at least one optical sensor (23, 24) in a waste stream (21) downstream of the at least one cleaning element (15, 16).

## Revendications

1. Machine de préparation (1 ; 100) avec un carter (26) qui encercle au moins une cheminée de remplissage (2) pour du matériau fibreux (3) et comporte au moins une ouverture du carter (27) permettant d'observer la cheminée de remplissage (2) depuis l'extérieur, et avec au moins un dispositif d'inspection (30) pour la détection de corps étrangers dans du matériau fibreux qui se trouve dans la cheminée de remplissage (2), dans laquelle le dispositif d'inspection (30) est monté dans au moins une de l'au moins une ouverture du carter (27) et
- comportant un dispositif de fermeture de l'ouverture (31) pour fermer l'ouverture du carter (27), qui comporte un élément de séparation (32) avec une zone d'observation (39) transparente définissant un plan d'observation (E), et un élément de couvercle (33) disposé sur l'élément de séparation (32), dans laquelle un espace intérieur (37) est formé entre l'élément de séparation (32) et l'élément de couvercle (33) ; et
- un dispositif de caméra (38) qui est disposé dans l'espace intérieur (37) ;
dans laquelle
- un axe optique (40) du dispositif de caméra (38) est aligné au moins pour l'essentiel parallèlement au plan d'observation (E), et
- un dispositif de déviation (41) est disposé dans l'espace intérieur (37) du dispositif de fermeture de l'ouverture (31), qui dévie une trajectoire des rayons (42) partant de la zone d'observation (39) vers le dispositif de caméra (38).

2. Machine de préparation (1 ; 100) selon la revendication 1, **caractérisée en ce que** le dispositif de déviation (41) comporte une surface réfléchissante (47), dans laquelle un angle d'incidence entre la trajectoire des rayons (42) et une normale à la surface de la surface réfléchissante (47) est de 45 degrés, ou dans laquelle un angle d'incidence entre la trajectoire des rayons (42) et une normale à la surface de la surface réfléchissante (47) est supérieur à 45 degrés et inférieur à 85 degrés.

3. Machine de préparation (1 ; 100) selon la revendication 1 ou 2, **caractérisée en ce que** le dispositif de caméra (38) comporte au moins une caméra à réseau linéaire (54 ; 54', 54'').

4. Machine de préparation (1 ; 100) selon l'une des revendications 1 à 3, **caractérisée en ce qu'**un dispositif d'éclairage (50) pour éclairer le matériau fibreux (3) passant devant la zone d'observation (39) est disposé dans l'espace intérieur (37), dans laquelle le dispositif d'éclairage (50) s'étend sur toute la largeur de la zone d'observation (39).

5. Machine de préparation (1 ; 100) selon l'une des revendications 1 à 4, **caractérisée en ce que** le dispositif de fermeture de l'ouverture (31) comporte une section supérieure (45) et une section inférieure (45) espacée axialement de la section supérieure (35) par rapport à l'axe optique (40), dans laquelle le dispositif de caméra (38) est disposé dans la section supérieure (45) et la zone d'observation (39) ainsi que le dispositif de déviation (41) sont disposés dans la section inférieure (46).

6. Machine de préparation (1 ; 100) selon l'une des revendications 1 à 5, **caractérisée en ce que** l'élément de couvercle (33) dans la section inférieure (46) est conçu pour être opaque.

7. Machine de préparation (1 ; 100) selon l'une des revendications 1 à 6, **caractérisée en ce que** le dispositif de fermeture de l'ouverture (31) comporte une section d'observation (5) dans laquelle l'élément de séparation (32) et l'élément de couvercle (33) sont conçus pour être transparents, notamment dans laquelle la section d'observation (59) est disposée entre la section supérieure (45) et la section inférieure (46).

8. Machine de préparation (1 ; 100) selon l'une des revendications 1 à 7, **caractérisée en ce que** le dispositif de fermeture de l'ouverture (31) comporte des moyens d'articulation (61) pour une fixation pivotante sur la machine de préparation (1 ; 100) au niveau de l'ouverture du carter (27).

9. Machine de préparation (1 ; 100) selon l'une des revendications 1 à 8, **caractérisée en ce qu'**un capteur de pression (29) pour mesurer une pression dynamique est disposé dans l'au moins une cheminée de remplissage (2), dans laquelle le capteur de pression (29) est disposé au-dessus d'un niveau de remplissage maximal (Fₘₐₓ) prédéfini pour l'au moins une cheminée de remplissage (2) et que l'au moins un dispositif d'inspection (30) est disposé en dessous du niveau de remplissage maximal (Fₘₐₓ).

10. Machine de préparation (1 ; 100) selon la revendication 9, **caractérisée en ce qu'**une barrière photoélectrique (28) ou un capteur de lumière est disposé dans l'au moins une cheminée de remplissage (2), dans laquelle une hauteur de montage de la barrière photoélectrique (28) ou du capteur de lumière définit le niveau de remplissage maximal (Fₘₐₓ).

11. Installation comportant plusieurs des machines de préparation (1 ; 100) selon l'une des revendications 1 à 10.

12. Procédé de détection de corps étrangers dans du matériau fibreux (3) qui se trouve dans une cheminée de remplissage (2) d'une machine de préparation (1 ; 100) selon l'une des revendications 1 à 10 ou dans des cheminées de remplissage (2) d'une installation selon la revendication 11, dans lequel le procédé comporte les étapes suivantes :
- Photographie (72) d'images du matériau fibreux (3) passant devant la zone d'observation (39) au moyen du dispositif de caméra (38) du dispositif d'inspection (30) respectif ;
- Analyse (73) des images photographiées par au moins une unité d'analyse (57) pour déterminer une teneur en corps étrangers dans le matériau fibreux (3) ;
- Affichage (76) d'au moins une valeur de sortie qui comporte la teneur en corps étrangers dans le matériau fibreux (3).

13. Procédé selon la revendication 12, **caractérisé en ce qu'**au moins une des machines de préparation (1 ; 100) ou l'installation comporte au moins un dispositif de capteur de déchets (22) qui est configuré pour déterminer une composition des déchets d'un matériau de rebut éliminé du matériau fibreux (3), comprenant des corps étrangers et des bonnes fibres, au moyen d'au moins un capteur optique (23, 24), et que le procédé comporte au moins une des étapes suivantes :
- Comparaison (85) de l'au moins une valeur de sortie avec au moins une valeur initiale prédéfinie et/ou précédente ;
- Exécution d'un cycle d'optimisation (92) sur la machine de préparation (1 ; 100) respective et/ou une machine de préparation de filature (1 ; 100) placée en aval de la machine de préparation (1 ; 100) respective et/ou une machine de préparation de filature (1 ; 100) placée en amont de la machine de préparation (1 ; 100) respective, dans lequel une position ou vitesse de rotation d'au moins un élément de nettoyage (15, 16) pour éliminer du matériau de rebut du matériau fibreux (3) est modifiée automatiquement lorsque l'au moins une valeur de sortie dévie de l'au moins une valeur initiale, dans lequel, au moyen d'un dispositif de capteur de déchets (22), une composition des déchets actuelle du matériau de rebut éliminé, comprenant des corps étrangers et des bonnes fibres, est déterminée (80) dans un tronçon de déchets (21) en aval de l'au moins un élément de nettoyage (15, 16) au moyen d'au moins un capteur optique (23, 24).
